# EUROPEAN PATENT APPLICATION

(11) **EP 4 765 954 A1**
(43) Date of publication of application: **24.06.2026**
(21) Application number: 24861910.8
(22) Date of filing: 30.08.2024
(51) Int. Cl.: H04W 40/12

(54) **COMMUNICATION METHOD AND APPARATUS, AND COMMUNICATION SYSTEM**

(30) Priority: 04.09.2023 CN 202311134763
(71) Applicant: HUAWEI TECHNOLOGIES CO., LTD., Shenzhen 518129 (CN)
(72) Inventor: PAN, Xiaodan, Shenzhen, Guangdong 518129 (CN); PENG, Wenjie, Shenzhen, Guangdong 518129 (CN)
(74) Representative: Maiwald GmbH
(86) International application number: PCT/CN2024/115931
(87) International publication number: WO 2025/051066

(57) **Abstract**

Embodiments of this application provide a communication method and apparatus, and a communication system, and relate to the field of communication technologies. The communication method includes: A first terminal device determines first information and/or second information, where the first information includes a first parameter, the first parameter indicates hop count information of the first terminal device, the second information includes a second parameter, the second parameter indicates a quantity of served terminal devices, and the served terminal device is a terminal device that obtains a relay service of the first terminal device. The first terminal device sends a first discovery message based on the first information and/or the second information, where the first discovery message indicates that the first terminal device supports the relay service. In this way, the first terminal device may determine, based on the hop count information and/or the quantity of served terminal devices of the first terminal device, capability information of providing the relay service for the served terminal device, so that quality of service of the relay service provided by the first terminal device can be ensured, thereby improving user experience.

## Description

### CROSS-REFERENCE TO RELATED APPLICATIONS

This application claims priority to Chinese Patent Application No. 202311134763.0, filed with the China National Intellectual Property Administration on September 4, 2023 and entitled "COMMUNICATION METHOD AND APPARATUS, AND COMMUNICATION SYSTEM", which is incorporated herein by reference in its entirety.

### TECHNICAL FIELD

This application relates to the field of communication technologies, and in particular, to a communication method and apparatus, and a communication system.

### BACKGROUND

With rapid development of a 3rd generation partnership project (3rd generation partnership project, 3GPP) system in the 5th generation (5th generation, 5G), an application scope of a relay technology (for example, R17 sidelink UE-to-network relay (sidelink UE-to-network relay, SL U2N Relay) communication) is increasingly wide.

In a possible U2N relay scenario, a remote terminal device (remote UE) may search, through a discovery procedure, for a relay terminal device (relay UE) that meets a sidelink quality condition for access. The relay terminal device can perform the discovery procedure provided that a Uu link signal quality condition is met. However, in a multi-hop relay scenario, the remote terminal device may be connected to an access network device via a plurality of relay terminal devices. Although improving network coverage can enable some remote terminals to have access opportunities, as a quantity of relay hops increases, uncertainty of quality of service of a relay service obtained by the remote terminal device increases, for example, a packet loss probability and a transmission delay increase. Consequently, quality of service of the relay service cannot be ensured, and communication quality between the remote terminal device and the access network device cannot be ensured.

### SUMMARY

Embodiments of this application provide a communication method and apparatus, and a communication system, to ensure quality of service of a relay service.

According to a first aspect, an embodiment of this application provides a communication method. The method may be performed by a first terminal device or a module (for example, a chip) used in the first terminal device. That the first terminal device performs the method is used as an example. The method includes: The first terminal device may obtain first information and/or second information. The first information includes a first parameter, the first parameter indicates hop count information of the first terminal device, the second information includes a second parameter, the second parameter indicates a quantity of served terminal devices, and the served terminal device is a terminal device that obtains a relay service of the first terminal device. The first terminal device may send a first discovery message based on the first information and/or the second information, where the first discovery message indicates that the first terminal device supports the relay service.

In the method, the first terminal device may determine, based on the hop count information of the first terminal device, whether to perform a discovery procedure, to prevent the first terminal device from performing the discovery procedure when a hop count in a single cell is large. Therefore, quality of service of the relay service provided by the first terminal device can be ensured, and communication quality between a subsequently accessed remote terminal device and an access network device can be ensured. In addition, the first terminal device may further determine, based on the quantity of served terminal devices of the first terminal device, whether to perform the discovery procedure, to avoid an access failure of the remote terminal device caused by a large quantity of served terminal devices of the first terminal device, thereby ensuring quality of service of the relay service provided by the first terminal device.

In a possible design, the hop count information indicates a quantity of relay terminal devices between the first terminal device and the access network device; or the hop count information indicates a remaining relay hop count; and the remaining relay hop count indicates a maximum value of a remaining connectable-relay hop count, and the relay terminal device is a terminal device that provides the relay service.

In a possible design, the first terminal device receives a third parameter from a first relay terminal device, where the first relay terminal device provides the relay service for the first terminal device, and the third parameter indicates the quantity of relay terminal devices between the first relay terminal device and the access network device or a remaining hop count of a connectable relay terminal. The first terminal device determines the first parameter based on the third parameter.

Optionally, when the first terminal device is not connected to the access network device, the first terminal device receives the third parameter from the first relay terminal device.

In a possible design, the first terminal device receives a fourth parameter from the access network device, where the fourth parameter indicates the quantity of relay terminal devices between the first terminal device and the access network device or the remaining hop count of the connectable relay terminal. The first terminal device determines the first parameter based on the fourth parameter.

Optionally, when the first terminal device is connected to the access network device, the first terminal device receives the fourth parameter from the access network device.

In a possible design, the first relay terminal device is connected to the first terminal device through a first link, and the first link is a link between devices. Optionally, the first link is a sidelink.

In a possible design, the first information further includes a first threshold, and the first threshold indicates a maximum value of the quantity of relay terminal devices between the first terminal device and the access network device; or the first threshold indicates a minimum value of the remaining relay hop count.

Optionally, the first threshold may be configured by the access network device for the first terminal device, or may be configured by using a system message, or may be configured by the first relay terminal device, or may be a default configuration of the first terminal device.

Optionally, the first terminal device may further send a first discovery message based on the first threshold and the first parameter. For example, the first terminal device sends the first discovery message when determining that the first parameter does not reach the first threshold.

In this design, the first threshold is configured in the first terminal device, to be specific, a quantity of relay terminal devices supported in a single cell to which the first terminal device belongs is limited, so that a subsequently accessed remote terminal device can be prevented from communicating with the access network device via a large quantity of relay terminal devices, thereby ensuring quality of service of the relay service of the first terminal device.

In a possible design, the first terminal device sends the first parameter of the first terminal device to a first served terminal device, where the first served terminal device is connected to the first terminal device through a first link, and the first link is a link between devices. The first link is a sidelink, and the first terminal device is directly connected to the first served terminal device.

In this design, the first terminal device sends the first parameter to the first served terminal device, so that the first served terminal device can determine, based on the first parameter, the quantity of relay terminal devices between the first served terminal device and the access network device or the remaining relay hop count.

In a possible design, the first information further includes signal quality. Optionally, the signal quality is sidelink (SL) signal quality or Uu signal quality. The SL signal quality is signal quality between the first relay terminal device and the first terminal device, or signal quality between the first terminal device and the second terminal device. The Uu signal quality is signal quality between the first terminal device and the access network device.

Optionally, the first terminal device may send the first discovery message based on the first parameter, the first threshold, and the signal quality. For example, when the first parameter does not reach the first threshold, and the signal quality is within a signal quality range, the first terminal device sends the first discovery message. The signal quality range may be configured by the access network device.

In a possible design, the second information further includes a second threshold, and the second threshold is a maximum value of a served terminal device of the first terminal device.

Optionally, the first terminal device may further send the first discovery message based on a second parameter and a second threshold. For example, when determining that the second parameter does not reach the second threshold, the first terminal device sends the first discovery message.

Optionally, the first terminal device may further send the first discovery message based on the first parameter, the first threshold, the second parameter, the second threshold, and the signal quality.

Optionally, the first terminal device may further send the first discovery message based on the first parameter, the first threshold, the second parameter, and the second threshold.

Optionally, the first terminal device may further send the first discovery message based on the signal quality, the second parameter, and the second threshold.

Optionally, the second threshold may be configured by the access network device for the first terminal device, or may be configured by using a system message, or may be configured by the first relay terminal device, or may be a default configuration of the first terminal device.

In this design, the served terminal device of the first terminal device has a limited value, and the first terminal device cannot provide the relay service without limitation, so that quality of service of the relay service provided by the first terminal device can be ensured.

In a possible design, the first terminal device receives first indication information from the first served terminal device, where the first indication information indicates a quantity of terminal devices that are connected to the first served terminal device and that obtain the relay service of the first served terminal device; and the first terminal device determines the second parameter based on the first indication information.

In this design, the first terminal device may determine, based on a quantity of served terminal devices of the first served terminal device directly connected to the first terminal device, a quantity of served terminal devices of the first terminal device.

In a possible design, the first terminal device sends the second parameter of the first terminal device to the first relay terminal device.

In this design, the first terminal device reports the second parameter to the first relay terminal device, so that the first relay device can determine, based on the second parameter, a quantity of served terminal devices of the first relay device.

In a possible design, the served terminal device of the first terminal device is a served terminal device in a connected state; or the served terminal device of the first terminal device includes the served terminal device in the connected state and a served terminal device in a non-connected state, where the non-connected state includes an inactive state and/or an idle state.

In a possible design, the first terminal device may determine, based on relay configuration information of the access network device, a quantity of served terminal devices in the connected state, where the relay configuration information is used by the first terminal device to forward data of the served terminal device.

Optionally, when the served terminal device of the first terminal device is a served terminal device in a connected state, the second parameter is the quantity of served terminal devices in the connected state.

In a possible design, the first terminal device may further receive second indication information from the first served terminal device, where the second indication information includes identification information of the first served terminal device and/or identification information of a second served terminal device, and the second served terminal device is a served terminal device in an inactive state and/or an idle state of the first served terminal device.

Optionally, the first served terminal device is a remote terminal device in a non-connected state, and the second indication information includes the identification information of the first served terminal device.

Optionally, the first served terminal device is a relay terminal device in a connected state, and the second indication information includes the identification information of the second served terminal device.

Optionally, the first served terminal device is a relay terminal device in a non-connected state, and the second indication information includes the identification information of the first served terminal device and the identification information of the second served terminal device.

In a possible design, the first terminal device determines, based on the identification information, a quantity of served terminal devices in a non-connected state.

Optionally, the first terminal device may use a sum of the quantity of served terminal devices in the connected state and the quantity of served terminal devices in the non-connected state as the second parameter.

In a possible design, after sending the first discovery message, the first terminal device may stop sending the first discovery message based on the second parameter and the second threshold. The first terminal device may further send first stop indication information to the first served terminal device, where the first stop indication information indicates that the relay service is no longer provided. Optionally, the first terminal device is directly connected to the access network device.

Optionally, the first terminal device may further determine a current value of the second parameter, to determine whether to stop sending the first discovery message. For example, the first terminal device may stop sending the first discovery message based on the current value of the second parameter and the second threshold.

Optionally, that the first terminal device stops sending the first discovery message includes: The first terminal device suspends sending of the first discovery message.

In this design, in a process of performing the discovery procedure, the first terminal device may determine, in real time based on the second parameter and the second threshold, whether the first terminal device is saturated and whether the first terminal device can continue to provide a good relay service. After determining to stop providing the relay service, the first terminal device sends the first stop indication information to the first served terminal device, to prevent a new terminal device from accessing a cell to which the first terminal device belongs.

In a possible design, the first terminal device may further receive second stop indication information from the first relay terminal device, and stop sending the first discovery message, where the second stop indication information indicates that the relay service is no longer provided. The first terminal device may further send third stop indication information to the first served terminal device, where the third stop indication information indicates that the relay service is no longer provided. Optionally, the first terminal device is not directly connected to the access network device.

In a possible design, after stopping sending the first discovery message, the first terminal device may further resume sending the first discovery message based on the second parameter and the second threshold. The first terminal device may further send first resume indication information to the first served terminal device, where the first resume indication information indicates that the relay service continues to be provided. Optionally, the first terminal device is directly connected to the access network device.

Optionally, a hysteresis value/offset may be further configured for the first terminal device. The hysteresis value/offset is less than the second threshold, and the hysteresis value/offset is an integer. Further, the first terminal device may further resume sending the first discovery message based on the current value of the second parameter, the second threshold, and the hysteresis value/offset.

In a possible design, the first terminal device may further receive second resume indication information from the first relay terminal device, and resume sending the first discovery message, where the second resume indication information indicates that the relay service continues to be provided. The first terminal device may further send third resume indication information to the first served terminal device, where the third resume indication information indicates that the relay service continues to be provided. Optionally, the first terminal device is not directly connected to the access network device.

According to a second aspect, a communication method is provided. The method may be performed by an access network device or a module (for example, a chip) used in the access network device. For example, the access network device performs the method. The method includes: The access network device sends a third parameter to a first terminal device, where the third parameter indicates a quantity of relay terminal devices between a first relay terminal device and the access network device or a remaining relay hop count, and the first relay terminal device provides a relay service for the first terminal device.

In an optional design, the access network device may configure a first threshold for the first terminal device, where the first threshold indicates a maximum value of the quantity of relay terminal devices between the first terminal device and the access network device; or the first threshold indicates a minimum value of the remaining relay hop count.

In an optional design, the access network device may configure a second threshold for the first terminal device, where the second threshold indicates a maximum value of a served terminal device of the first terminal device, and the served terminal device is a terminal device that obtains the relay service of the first terminal device.

According to a third aspect, a communication method is provided. The method may be performed by a first terminal device or a module (for example, a chip) used in the first terminal device. For example, the first terminal device performs the method. The method includes: The first terminal device sends third indication information to a first relay terminal device, where the third indication information includes identification information of the first terminal device and/or identification information of a third served terminal device, the first relay terminal device provides a relay service for the first terminal device, and the third served terminal device is a terminal device in an inactive state and/or an idle state that is of the first terminal device and that obtains the relay service of the first terminal device.

In the method, the first terminal device sends the third indication information to the first relay terminal device, so that the first relay terminal device can collect, based on the third indication information, statistics on a quantity of terminal devices that are connected to the first relay terminal device and that obtain the relay service of the first relay terminal device.

According to a fourth aspect, a communication method is provided. The method may be performed by a first terminal device or a module (for example, a chip) used in the first terminal device. For example, the first terminal device performs the method. The method includes: The first terminal device sends a first discovery message, where the first discovery message includes a first parameter of the first terminal device, the first parameter indicates hop count information of the first terminal device, and the first discovery message indicates that the first terminal device supports a relay service.

In the method, the first terminal device adds the hop count information of the first terminal device to the first discovery message, so that a terminal device that receives the first discovery message can determine, based on the hop count information, whether to perform access.

In an optional design, the hop count information indicates a quantity of relay terminal devices between the first terminal device and an access network device; or the hop count information indicates a remaining relay hop count. The relay terminal device is a terminal device that provides the relay service.

In an optional design, the first discovery message further includes a first threshold, and the first threshold indicates a maximum value of the quantity of relay terminal devices between the first terminal device and the access network device; or the first threshold indicates a minimum value of the remaining relay hop count.

In an optional design, the first discovery message further includes identification information of the first relay terminal device, and the first relay terminal device provides the relay service for the first terminal device.

In an optional design, the first discovery message further includes type information, and the type information indicates a service type of the relay service provided by the first terminal device.

Optionally, the service type includes but is not limited to an air relay service and a terrestrial relay service.

According to a fifth aspect, a communication method is provided. The method may be performed by a second terminal device or a module (for example, a chip) used in the second terminal device. For example, the second terminal device performs the method. The method includes: The second terminal device receives a first discovery message from a first terminal device, where the first discovery message indicates that the first terminal device supports a relay service, the first discovery message includes a first parameter of the first terminal device, and the first parameter indicates hop count information of the first terminal device; and the second terminal device may determine, based on the first discovery message, that the first terminal device provides the relay service for the second terminal device.

In the method, the second terminal device may determine, based on the first parameter, a quantity of nearby available relay terminal devices between the first terminal device and an access network device; and the second terminal device may determine, based on the first parameter, whether the first terminal device provides the relay service for the second terminal device, to ensure quality of service of the relay service obtained by the second terminal device.

In an optional design, the hop count information indicates a quantity of relay terminal devices between the first terminal device and the access network device; or the hop count information indicates a remaining hop count of a connectable relay terminal device, and the relay terminal device is a terminal device that provides the relay service.

In an optional design, the second terminal device may further receive a second discovery message from a third terminal device, where the second discovery message indicates that the third terminal device supports the relay service, the second discovery message includes identification information of the first terminal device, and the first terminal device provides the relay service for the third terminal device.

Optionally, the second terminal device may determine, based on the first discovery message and the second discovery message, that the first terminal device provides the relay service for the second terminal device.

In an optional design, the first discovery message further includes a first threshold, and the first threshold indicates a maximum value of the quantity of relay terminal devices between the first terminal device and the access network device; or the first threshold indicates a minimum value of the remaining relay hop count.

Optionally, the second terminal device may determine, based on the first threshold and the first parameter, that the first terminal device provides the relay service for the second terminal device.

In an optional design, the first discovery message further includes type information, and the type information indicates a service type of the relay service provided by the first terminal device.

In an optional design, the second terminal device may generate measurement information of the first terminal device based on the first discovery message, and report the measurement information of the first terminal device to the access network device, where the measurement information includes one or more of the first parameter, the identification information of the first terminal device, identification information of a first relay terminal device, the first threshold, and the type information, and the first relay terminal device provides the relay service for the first terminal device.

In an optional design, the second terminal device may generate measurement information of the third terminal device based on the second discovery message of the third terminal device, and report the measurement information of the third terminal device to the access network device, where the measurement information of the third terminal device includes the identification information of the first terminal device and identification information of the third terminal device.

In this design, the access network device may determine, based on the first parameter in the received measurement information, the first terminal device that provides the relay service for the second terminal device; or the access network device may determine, based on the identification information of the first relay terminal device and the identification information of the first terminal device in the measurement information of the first terminal device, and the identification information of the first terminal device and the identification information of the third terminal device in the measurement information of the third terminal device, that the first terminal device provides the relay service for the second terminal device.

Optionally, the second terminal device may further receive the identification information of the first terminal device from the access network device, and determine that the first terminal device provides the relay service for the second terminal device.

According to a sixth aspect, a communication method is provided. The method may be performed by an access network device or a module (for example, a chip) used in the access network device. For example, the access network device performs the method. The method includes: The access network device receives a first message from a second terminal device, where the first message includes measurement information of a first terminal device, and the measurement information of the first terminal device includes one or more of a first parameter, identification information of the first terminal device, identification information of a first relay terminal device, a first threshold, and type information. The first parameter indicates hop count information of the first terminal device, the type information indicates a service type of a relay service provided by the first terminal device, the first relay terminal device provides the relay service for the first terminal device, and the first threshold indicates a maximum value of a quantity of relay terminal devices between the first terminal device and the access network device or a minimum value of a remaining relay hop count. The access network device may further determine, based on the first message, that the first terminal device provides the relay service for the second terminal device.

In the method, the access network device may select, for the second terminal device based on the hop count information of the first terminal device, the first terminal device that provides the relay service, so that quality of service of the relay service can be ensured.

Optionally, the access network device sends the identification information of the first terminal device to the second terminal device, so that the second terminal device obtains the relay service of the first terminal device.

In an optional design, the hop count information indicates the quantity of relay terminal devices between the first terminal device and the access network device; or the hop count information indicates the remaining relay hop count; and the relay terminal device is a terminal device that provides the relay service.

In an optional design, the first message further includes measurement information of a third terminal device, and the measurement information of the third terminal device includes the identification information of the first terminal device and identification information of the third terminal device. The first terminal device provides the relay service for the third terminal device.

Optionally, the access network device determines, based on the measurement information of the first terminal device and the measurement information of the third terminal device, that the first terminal device provides the relay service for the second terminal device, so that quality of service of the relay service obtained by the second terminal device can be ensured.

Optionally, the access network device may further send the identification information of the first terminal device to the second terminal device, so that the second terminal device obtains the relay service of the first terminal device.

According to a seventh aspect, an embodiment of this application provides a communication system, including a first terminal device configured to perform the method according to any one of the implementations of the first aspect or the third aspect, and an access network device configured to perform the method according to any one of the implementations of the second aspect.

According to an eighth aspect, an embodiment of this application provides a communication system, including a first terminal device configured to perform the method according to any one of the implementations of the third aspect or the fourth aspect, a second terminal device configured to perform the method according to any one of the implementations of the fifth aspect, and an access network device configured to perform the method according to any one of the implementations of the sixth aspect.

According to a ninth aspect, this application further provides a communication apparatus. The communication apparatus may be a first terminal device, and has a function of the first terminal device according to the first aspect, the third aspect, the fourth aspect, and the possible design examples of any one of the aspects. The function may be implemented by hardware, or may be implemented by hardware executing corresponding software. The hardware or the software includes one or more units corresponding to the foregoing function.

In a possible design, a structure of the communication apparatus may include a transceiver unit and a processing unit. These units may perform corresponding functions of the first terminal device according to the first aspect, the third aspect, the fourth aspect, or the possible design examples of the first aspect. For details, refer to the detailed description in the method examples. The details are not described herein again.

In a possible design, a structure of the communication apparatus includes an interface circuit and one or more processors. Optionally, the communication apparatus further includes a memory. The interface circuit is configured to: receive and send data, and is configured to communicate and interact with another device in the communication system. The one or more processors are configured to support the communication apparatus in performing corresponding functions of the first terminal device according to the first aspect, the third aspect, the fourth aspect, or the possible design examples of any one of the foregoing aspects. The memory is coupled to one or more processors, and stores program instructions and data that are necessary for the communication apparatus.

According to a tenth aspect, this application further provides a communication apparatus. The communication apparatus may be an access network device, and has a function of the access network device in the possible design examples of the second aspect or the sixth aspect. The function may be implemented by hardware, or may be implemented by hardware executing corresponding software. The hardware or the software includes one or more units corresponding to the foregoing function.

In a possible design, a structure of the communication apparatus may include a transceiver unit and a processing unit. These units may perform corresponding functions of the access network device according to the possible design examples of the second aspect or the sixth aspect. For details, refer to the detailed description in the method examples. The details are not described herein again.

In a possible design, a structure of the communication apparatus includes an interface circuit and one or more processors. Optionally, the communication apparatus further includes a memory. The interface circuit is configured to: receive and send data, and is configured to communicate and interact with another device in the communication system. The one or more processors are configured to support the communication apparatus in performing corresponding functions of the access network device in the possible design examples of the second aspect or the sixth aspect. The memory is coupled to one or more processors, and stores program instructions and data that are necessary for the communication apparatus.

According to an eleventh aspect, this application further provides a communication apparatus. The communication apparatus may be a second terminal device, and has a function of the second terminal device according to the fifth aspect or the possible design examples of the fifth aspect. The function may be implemented by hardware, or may be implemented by hardware executing corresponding software. The hardware or the software includes one or more units corresponding to the foregoing function.

In a possible design, a structure of the communication apparatus may include a transceiver unit and a processing unit. These units may perform corresponding functions of the second terminal device according to the fifth aspect or the possible design examples of the fifth aspect. For details, refer to the detailed description in the method examples. The details are not described herein again.

In a possible design, a structure of the communication apparatus includes an interface circuit and one or more processors. Optionally, the communication apparatus further includes a memory. The interface circuit is configured to: receive and send data, and is configured to communicate and interact with another device in the communication system. The one or more processors are configured to support the communication apparatus in performing corresponding functions of the second terminal device according to the fifth aspect or the possible design examples of the fifth aspect. The memory is coupled to one or more processors, and stores program instructions and data that are necessary for the communication apparatus.

According to a twelfth aspect, an embodiment of this application provides a computer-readable storage medium. The computer-readable storage medium stores program instructions, and when the program instructions are on a computer, the computer is enabled to implement the method according to any one of the first aspect to the sixth aspect and the possible designs of any one of the first aspect to the sixth aspect in embodiments of this application.

According to a thirteenth aspect, this application further provides a chip. The chip is coupled to a memory, and is configured to: read and execute program instructions stored in the memory, to implement the method according to any one of the first aspect to the sixth aspect and the possible designs of any one of the first aspect to the sixth aspect.

According to a fourteenth aspect, an embodiment of this application provides a computer program product including computer program code or instructions. When the computer program product runs on a computer, the computer is enabled to implement the method according to any one of the first aspect to the sixth aspect and the possible designs of any one of the first aspect to the sixth aspect.

For technical effects that may be achieved in the seventh aspect to the fourteenth aspect and the possible designs of the aspects, refer to the technical effects that may be achieved in the first aspect to the sixth aspect and the possible designs of the aspects. Details are not described herein again in this application.

### BRIEF DESCRIPTION OF DRAWINGS

FIG. 1 is a diagram of an architecture of a communication system to which an embodiment of this application is applied;
FIG. 2 is a diagram of a communication architecture of an SL U2N relay;
FIG. 3 is a diagram of a protocol stack of an L2 SL U2N relay;
FIG. 4 is a diagram of another communication architecture of an SL U2N relay;
FIG. 5 is a schematic flowchart of a communication method according to an embodiment of this application;
FIG. 6 is a diagram of a multi-hop relay scenario according to an embodiment of this application;
FIG. 7 is a diagram of another multi-hop relay scenario according to an embodiment of this application;
FIG. 8 is a schematic flowchart of determining a second parameter by a first terminal device according to an embodiment of this application;
FIG. 9 is another schematic flowchart of a communication method according to an embodiment of this application;
FIG. 10 is still another schematic flowchart of a communication method according to an embodiment of this application;
FIG. 11 is yet another schematic flowchart of a communication method according to an embodiment of this application;
FIG. 12 is a diagram of still another multi-hop relay scenario according to an embodiment of this application;
FIG. 13 is a diagram of a structure of a communication apparatus according to an embodiment of this application; and
FIG. 14 is another diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment.

In embodiments of this application, the term "a plurality of' means two or more. In view of this, in embodiments of this application, "a plurality of' may also be understood as "at least two". "At least one" may be understood as one or more, for example, one, two, or more. For example, "including at least one" refers to "including one, two, or more", and does not limit "which one is included". For example, if at least one of A, B, and C is included, A, B, C, A and B, A and C, B and C, or A, B, and C may be included. Similarly, understandings of descriptions such as "at least one" are also similar. "At least one of the following items (pieces)" or a similar expression thereof indicates any combination of the items, including one of the items (pieces) or any combination of a plurality of the items (pieces). For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects.

Unless otherwise specified, ordinal numbers such as "first" and "second" mentioned in embodiments of this application are used to distinguish between a plurality of objects, and are not used to limit a sequence, a time sequence, a priority, or an importance degree of the plurality of objects. In addition, descriptions of "first" and "second" do not mean that objects are necessarily different.

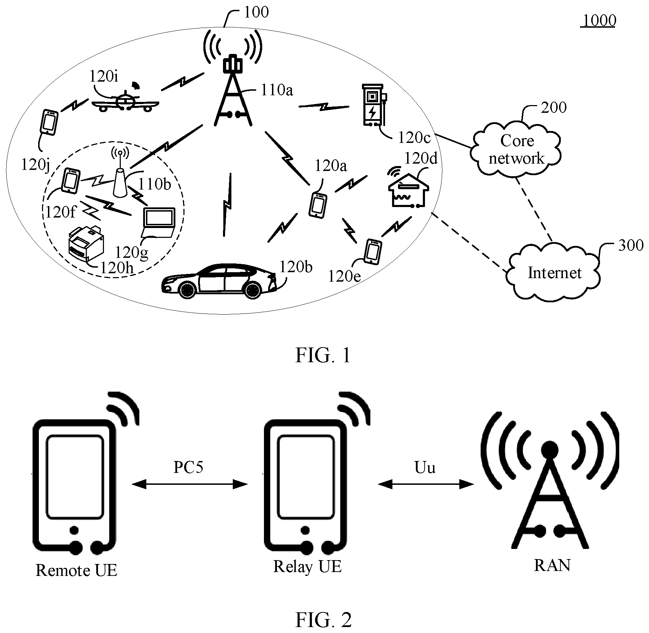

FIG. 1 is a diagram of an architecture of a communication system to which an embodiment of this application is applicable. The communication system 1000 includes a radio access network 100 and a core network 200. Optionally, the communication system 1000 may further include an internet 300. The radio access network 100 includes at least one access network (access network, AN) device, for example, 110a and 110b in FIG. 1, and further includes at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or access network device may provide different functions in different application scenarios. For example, mobile phones in FIG. 1 include 120a, 120e, 120f, and 120j. The mobile phone 120a may access the base station 110a, be connected to the vehicle 120b, directly communicate with the mobile phone 120e, and access the HAP. The mobile phone 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The terminal device is connected to the access network device, and the access network device is connected to the core network. A core network device and the access network device may be different physical devices that are independent of each other, or functions of the core network device and logical functions of the access network device may be integrated into a same physical device, or some functions of the core network device and some functions of the access network device may be integrated into one physical device. Terminal devices may be connected to each other in a wired or wireless manner, and access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may include a radio access network (radio access network, RAN) device, for example, a base station. The access network device may be a base station (base station), an evolved NodeB (evolved NodeB, which may be briefly referred to as an eNB or an e-NodeB) in a long term evolution (long term evolution, LTE) system or a long term evolution-advanced (long term evolution-advanced, LTE-A) system, a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be an access network device in an open access network (open RAN, ORAN) system, or the like. Optionally, the access network device may be a module or unit that implements some functions of the base station. For example, the access network device may be a central unit (central unit, CU), a distributed unit (distributed unit, DU), a CU-control plane (control plane, CP), a CU-user plane (user plane, UP), or a radio unit (radio unit, RU). The CU may complete functions of a radio resource control protocol and a packet data convergence protocol (packet data convergence protocol, PDCP) of the base station, and may further complete a function of a service data adaptation protocol (service data adaptation protocol, SDAP). The DU may complete functions of a radio link control layer and a medium access control (medium access control, MAC) layer of the base station, and may further complete some or all of functions of a physical layer. In different systems, the CU (or the CU-CP and the CU-UP), the DU, or the RU may also have different names, but a person skilled in the art may understand meanings thereof. In an ORAN system, the CU may also be referred to as an O-CU, the DU may also be referred to as an open (open, O)-DU, the CU-CP may also be referred to as an O-CU-CP, the CU-UP may also be referred to as an O-CUP-UP, and the RU may also be referred to as an O-RU.

For example, the access network device may be a macro base station (for example, 110a in FIG. 1), or may be a micro base station (or referred to as a small cell) or an indoor base station (for example, 110b in FIG. 1), or may be a relay node, a donor node, or the like. The access network device may alternatively be a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a remote radio unit (remote radio unit, RRU), a Wi-Fi access point (access point, AP), a baseband unit pool (BBU pool) and an RRU in a cloud radio access network (cloud radio access network, CRAN), or the like. A specific technology and a specific device form that are used by the access network device are not limited in embodiments of this application.

The terminal device may also be referred to as a terminal, a user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The access network device and the UE may be at a fixed location, or may be mobile. The access network device and the UE may be deployed on land, including indoor, outdoor, handheld, or vehicle-mounted; may be deployed on a water surface; or may be deployed on an airplane, a balloon, or an artificial satellite in the air. An application scenario of the access network device and the UE is not limited in embodiments of this application.

Roles of the access network device and the UE may be relative. For example, a helicopter or an uncrewed aerial vehicle 120i in FIG. 1 may be configured as a mobile access network device. For 120j accessing the radio access network 100 through 120i, 120i is an access network device. However, for an access network device 110a, 120i is a UE. In other words, 110a communicates with 120i by using a radio air interface protocol. Certainly, 110a and 120i may alternatively communicate with each other by using an interface protocol between access network devices. In this case, for 110a, 120i is also an access network device. Therefore, both the access network device and the UE may be collectively referred to as communication apparatuses. 110a and 110b in FIG. 1 may be referred to as communication apparatuses having the functions of the access network device, and 120a to 120j in FIG. 1 may be referred to as communication apparatuses having the functions of the UE.

Communication between an access network device and a UE, between access network devices, or between UEs may be performed through a licensed spectrum, an unlicensed spectrum, or both a licensed spectrum and an unlicensed spectrum; and communication may be performed through a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

For ease of understanding the solutions in embodiments of this application, terminologies or terms in embodiments of this application are first described below.

### (1) Sidelink (sidelink) communication

In a wireless communication system, data communication may be performed between UEs through a network, or communication between UEs may be directly performed without using a network. An interface between UEs is referred to as a PC5 interface, and is similar to a Uu interface between a UE and an access network device. A link between UEs is referred to as a sidelink. A typical application scenario of sidelink communication is vehicle-to-everything (vehicle-to-everything, V2X). In the vehicle-to-everything, each vehicle is one UE, and UEs may directly perform data transmission with each other through a sidelink but not over a network. In this way, a communication delay can be effectively reduced. It may be understood that the sidelink may also be referred to as a side link or the like.

### (2) Broadcast, unicast, and multicast on a sidelink

Broadcast communication on the sidelink is similar to broadcasting system information by an access network device. To be specific, a UE sends data of a broadcast service to the outside without encryption, and any other UE in an effective receiving range that is interested in the broadcast service can receive the data of the broadcast service.

Unicast communication on the sidelink is similar to data communication performed after a radio resource control (radio resource control, RRC) connection is set up between the UE and the access network device, and a unicast connection needs to be first set up between two UEs. After the unicast connection is set up, the two UEs may perform data communication based on a negotiated identifier, and data may be encrypted or may not be encrypted.

Multicast communication on the sidelink refers to communication between all UEs in a communication group, and any UE in the group can receive and send data of a multicast service.

Unicast communication is used as an example. One unicast communication on the sidelink corresponds to a pair of a source layer-2 identifier (source layer-2 identifier, source L2 ID) and a destination layer-2 identifier (destination layer-2 identifier, destination L2 ID). A subheader of each medium access control protocol data unit (medium access control protocol data unit, MAC PDU) on the sidelink and physical layer control signaling generally include the source L2 ID and the destination L2 ID, so that data can be transmitted from a transmit end to a correct receive end.

### (3) Radio bearer (Radio Bearer, RB)

The radio bearer is a general term of a series of protocol entities and configurations allocated by an access network device to a UE, including a series of resources allocated by a packet data convergence protocol (packet data convergence protocol, PDCP) entity, a radio link control (radio link control, RLC) protocol entity, a medium access control (medium access control, MAC) protocol entity, and a physical layer (PHY). The radio bearer includes a data radio bearer (data radio bearer, DRB) and a signaling radio bearer (signaling radio bearer, SRB). The former is for carrying data, and the latter is for carrying a signaling message.

### (5) Discovery procedure (discovery procedure)

A UE that supports a proximity service searches for a nearby UE by using the discovery procedure, and sets up a unicast connection to the nearby UE to perform subsequent sidelink communication. A discovery protocol layer of the UE generates a discovery message, delivers the discovery message to a PDCP layer, and sends the discovery message to a peer UE via a lower layer.

The discovery procedure has two models: a model A (Model A) and a model B (Model B). In the model A, the UE may include an announcing UE (Announcing UE) and a monitoring UE (Monitoring UE). The announcing UE broadcasts a discovery message (discovery message), where the discovery message is also referred to as an announcement message (announcement message). The announcement message may carry specific information of the announcing UE, for example, a relay service code (relay service code, RSC) that indicates a service type that can be provided and is used by a surrounding UE to determine whether a service type that can be provided by the announcing UE is needed. After monitoring and receiving the announcement message, the neighboring monitoring UE determines, based on content carried in the announcement message, whether to use the announcing UE as a peer UE of sidelink communication. In the model B, the UE may include a discoverer UE and a discoveree UE. The discoverer UE broadcasts a discovery message, where the discovery message is also referred to as a solicitation message (solicitation message), and the solicitation message carries information about a service type that the discoverer UE is interested in. After monitoring and receiving the solicitation message, if the discoveree UE finds that the discoveree UE meets a service requirement of the discoverer UE, the discoveree UE replies the discoverer UE with another discovery message, where the discovery message is also referred to as a response message (response message).

Similar to sidelink communication, a source L2 ID and a destination L2 ID are used by the UE to send or receive a discovery message. The source L2 ID is independently allocated by a sending UE, and the destination L2 ID is a predefined or pre-configured default destination L2 ID.

### (6) Unicast connection setup

After a discovery procedure, a unicast connection is set up between UEs by using a unicast connection setup procedure. A UE that initiates the unicast connection setup procedure is referred to as an initiating UE (initiating UE), and a peer UE of the initiating UE is referred to as a target UE (target UE). After the discovery procedure, the initiating UE sends a unicast connection setup request (direct communication request, DCR) message to the target UE. The message carries an L2 ID of the initiating UE, an L2 ID of the target UE, and user information. The user information includes information related to an upper application layer. After receiving the unicast connection setup request message, the target UE determines, based on the user information in the unicast connection setup request message, whether the unicast connection setup request can be accepted. If the unicast connection setup request can be accepted, the initiating UE is replied with a unicast connection accept (direct communication accept, DCA) message. If the unicast connection setup request cannot be accepted, the initiating UE is replied with a unicast connection reject (direct communication reject, DCR) message.

In the foregoing model A, the monitoring UE may actively initiate a unicast connection setup process after finding a suitable peer UE. In the foregoing model B, the discoverer UE may initiate a unicast setup procedure after receiving a reply message from a suitable discoveree UE.

### (7) Sidelink UE-to-network relay (also referred to as sidelink UE-to-Network Relay, SLUE-to-Network Relay, or SL U2N Relay)

The SL U2N relay is a technology in which one UE helps another UE communicate with an access network device, and is also referred to as a relay technology. FIG. 2 is a diagram of a communication architecture of an SL U2N relay. A remote UE (Remote UE) communicates with an access network device through cooperation of a relay UE (Relay UE). The remote UE communicates with the relay UE via a sidelink, and a corresponding interface is referred to as PC5. The relay UE and the access network device are directly connected to each other, that is, communicate with each other through a Uu interface.

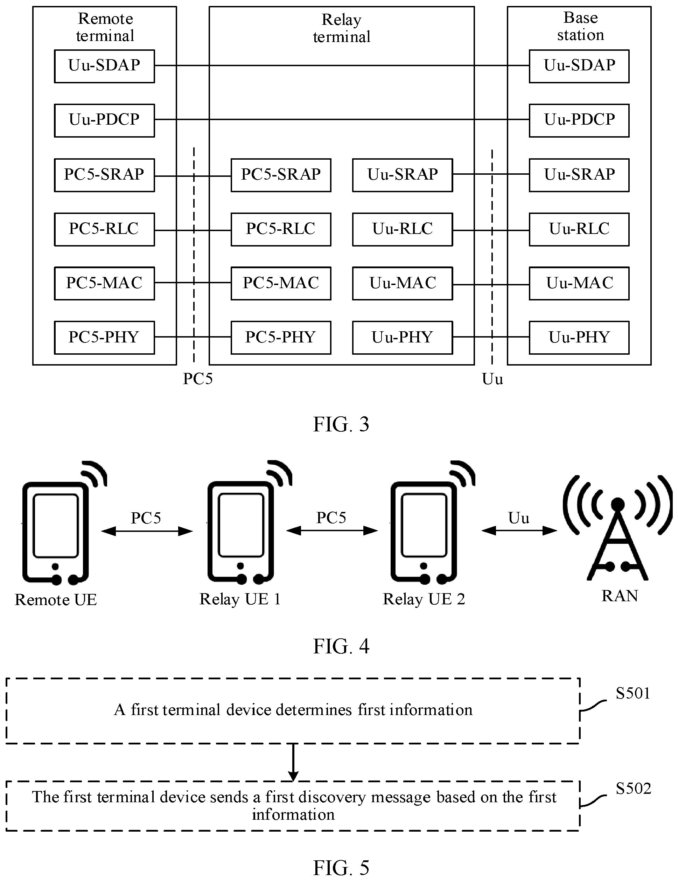

FIG. 3 is a diagram of a protocol stack of an L2 SL U2N relay. A data packet of a remote UE is relayed and forwarded below a PDCP layer of a relay UE. To be specific, the relay UE maintains only an RLC bearer of the relay, including an RLC layer, a MAC layer, and a PHY layer. Therefore, there is an end-to-end PDCP layer, an end-to-end SDAP layer, and an end-to-end RRC layer between the remote UE and an access network device, but there is no end-to-end RLC layer, end-to-end MAC layer, and end-to-end PHY layer between the remote UE and the access network device.

In the protocol architecture, a sidelink relay adaptation protocol (sidelink relay adaptation protocol, SRAP) layer is added between the RLC layer and the PDCP layer. The SRAP layer is mainly used for multiplexing and demultiplexing of radio bearers. In other words, multiplexing of different radio bearers onto one RLC bearer and a corresponding demultiplexing process are supported. An RLC bearer between the remote UE and the relay UE is referred to as a PC5 relay RLC channel/bearer, and an RLC bearer between the relay UE and the access network device is referred to as a Uu relay RLC channel/bearer. Through multiplexing, different radio bearers of one remote UE may be multiplexed onto one PC5 relay RLC channel. Alternatively, in a scenario in which one relay UE is connected to a plurality of remote UEs, different radio bearers of one or more remote UEs may be multiplexed onto one Uu relay RLC channel.

To distinguish between data of different remote UEs, the access network device allocates a remote UE ID, also referred to as a local ID, to each remote UE, and includes the ID to a data packet routing process, to indicate a remote UE to which the data belongs. It is determined in the existing 3GPP protocol that the remote UE local ID is allocated by the access network device in which the relay UE is located, and the allocated local ID may be unique in the access network device, or may be unique in the relay UE. A current possible allocation manner is as follows: After the remote UE sets up a unicast connection to the relay UE, the relay UE sends an RRC message to the access network device. The RRC message is an SidelinkUEInformationNR (SUI) message in an existing protocol, and the message carries an L2 ID of the remote UE, to request the access network device to allocate a local ID to the remote UE.

The access network device performs SRAP configuration for the remote UE and the relay UE. The SRAP configuration may include a mapping relationship between an SRB ID/DRB ID of the remote UE and a Uu relay RLC channel/PC5 relay RLC channel, so that data of the remote UE can be correctly relayed and forwarded via the relay UE. Specifically, the access network device configures, for the remote UE, a mapping relationship between a radio bearer (an SRB or a DRB) and the PC5 relay RLC channel, and configures, for the relay UE, a mapping relationship between the radio bearer of the remote UE and the Uu/PC5 relay RLC channel. When sending uplink or downlink data, the remote UE or the access network device adds a local ID and an RB ID of the remote UE to an SRAP header. Based on the SRAP configuration, data of the remote UE can be correctly relayed and forwarded via the relay UE. An uplink is used as an example. In a data transmission process, after receiving a PDCP PDU from the PDCP layer, the SRAP layer of the remote UE adds ID information of the remote UE and ID information of the radio bearer (SRB or DRB) to an SRAP header. After receiving a data packet from the PC5 relay RLC channel, an adaptation layer of the relay UE may deliver the data packet to a correct Uu relay RLC channel based on the mapping relationship configured by the access network device. After receiving the data packet from the Uu relay RLC channel, the access network device side delivers, based on the ID information of the remote UE and the ID information of the radio bearer in the SRAP header, the data packet to a corresponding PDCP layer for processing. A data transmission process in a downlink direction is similar to that in an uplink direction. Details are not described herein again. The ID information of the remote UE may be a local ID of the remote UE. The local ID is a UE identifier allocated by the access network device to the remote UE. The local ID is for sending uplink and downlink data of the remote UE. The identifier is added to the SRAR header, so that the relay UE and the access network device can identify the remote UE to which the data packet belongs.

The foregoing describes, from a perspective of the L2 relay, a specific implementation in which a remote terminal device is connected to an access network device via one relay terminal device. In another possible implementation, the remote terminal device may be connected to a network via two or more relay terminal devices. FIG. 4 is a diagram of another communication architecture of an SL U2N relay. As shown in FIG. 4, a communication system includes one remote terminal device, two or more relay terminal devices (a relay terminal device 1 and a relay terminal device 2 are used as an example in FIG. 4) and an access network device (a RAN is used as an example in FIG. 4). The relay terminal device 2 is directly connected to the access network device, and the relay terminal device 2 and the access network device may communicate with each other through a Uu interface. A connection exists between the remote terminal device and the relay terminal device 1, and the remote terminal device and the relay terminal device 1 may communicate with each other through a PC5 interface. A connection exists between the relay terminal device 1 and the relay terminal device 2, and the relay terminal device 1 and the relay terminal device 2 may communicate with each other through a PC5 interface. The remote terminal device may access the access network device vi the relay terminal device 1 and the relay terminal device 2. Optionally, the communication system further includes a core network, and the remote terminal device may access the core network through the relay terminal device 1, the relay terminal device 2, and the access network device.

In a multi-hop relay scenario, the remote terminal device searches for an available relay terminal device in a discovery procedure. A determining condition of the available relay terminal device is that a Uu link quality condition is met, that is, the available relay terminal device may be used as a relay terminal to provide a relay service for another terminal when a specific Uu link quality condition is met. In this way, the remote terminal device may access a relay terminal device connected to the access network device via a plurality of relay terminal devices. As a relay hop count increases, uncertainty of quality of the relay service increases, for example, a packet loss probability and a transmission delay increase. Therefore, quality of service of the relay service cannot be ensured, and communication quantity between the remote terminal device and the access network device cannot be ensured.

The communication method provided in embodiments of this application is used to ensure quality of service of the relay service, thereby ensuring communication quality between the remote terminal device and the access network device, and improving user experience. The method may be applied to a multi-hop U2N relay scenario shown in FIG. 4, and may be further applied to a multi-hop UE-to-UE scenario (that is, a remote terminal device communicates with a target terminal device via two or more relay apparatuses). For ease of understanding, the following describes an example in which embodiments of this application are applied to the multi-hop U2N relay scenario shown in FIG. 4. The first terminal device may be a terminal device having a relay capability. Further, the first terminal device may be a relay terminal device, or may be a remote terminal device having a relay capability. For example, the first terminal device may be a relay terminal device directly connected to the access network device, or may be a relay terminal device between the remote terminal device and the access network device. For example, the first terminal device may be the relay UE 1 in FIG. 4, or may be the relay UE 2 in FIG. 4, or may be the remote UE in FIG. 4. The served terminal device is a terminal device that obtains a relay service of the first terminal device. In this embodiment of this application, the served terminal device may also be referred to as an X^{th} terminal device, for example, a fourth terminal device. Further, the served terminal device may be a relay terminal device, or may be a remote terminal device having a relay capability. For example, when the first terminal device is the relay UE 2 in FIG. 4, the served terminal device of the first terminal device is the relay UE 1 in FIG. 4. For another example, when the first terminal device is the relay UE 1 in FIG. 4, the served terminal device is the remote UE in FIG. 4.

With reference to the accompanying drawings, the following describes the communication method provided in embodiments of this application. In the accompanying drawings corresponding to embodiments of this application, all optional steps are represented by dashed lines.

FIG. 5 is a schematic flowchart of a communication method according to an embodiment of this application. In this embodiment, a discovery procedure is initiated by a first terminal device.

S501: The first terminal device determines first information.

Optionally, the first terminal device determines whether the first terminal device has a relay capability, that is, whether the first terminal device has a capability of providing a relay service for another terminal device. After determining that the first terminal device has the relay capability, the first terminal device determines the first information. Further, the first terminal device may further determine whether an access network device connected to the first terminal device supports the relay service. For example, a first terminal device in a connected state may determine, based on dedicated configuration (for example, RRC configuration) information of the access network device, whether the access network device supports the relay service. For another example, a first terminal device in an idle state/inactive state may determine, based on a system message of the access network device, whether the access network device supports the relay service. For example, the dedicated configuration or the system message configuration may include a signal quality condition indicating whether the first terminal device can be used as a relay. For example, when Uu signal quality or sidelink signal quality of the first terminal device meets a threshold condition indicated in the dedicated configuration or the system message configuration, the first terminal device determines that the signal quality condition indicating that the first terminal device is used as the relay is met.

The first information may indicate hop count information of the first terminal device. In this embodiment of this application, the hop count information may indicate a quantity of relay terminal devices between the first terminal device and the access network device, or the hop count information may indicate a remaining relay hop count. The relay terminal device is a terminal device that provides the relay service.

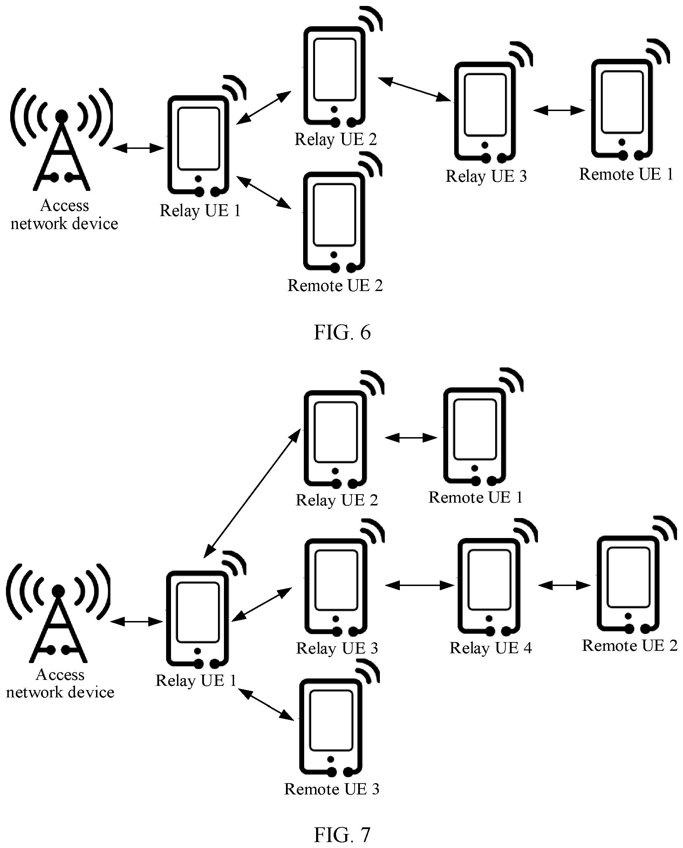

Optionally, the first information includes a first parameter. The first parameter indicates hop count information of the first terminal device. For example, as shown in FIG. 6, this application provides a diagram of a multi-hop relay scenario. FIG. 6 is used as an example. When the first terminal device is a remote UE 1, the relay terminal devices between the first terminal device and the access network device are a relay UE 1, a relay UE 2, and a relay UE 3, and a quantity of relay terminal devices between the first terminal device and the access network device is 3, that is, the first parameter is 3. Alternatively, the hop count information may further indicate a remaining relay hop count, and the remaining relay hop count indicates a maximum value of a remaining connectable-relay hop count. Further, the remaining relay hop count may be a hop count of a relay terminal device that can be further connected to the first terminal device currently. FIG. 6 is used as an example. A maximum hop count of a relay terminal device supported in a single cell to which the first terminal device belongs is 4. When the first terminal device is a remote UE 1, a quantity of relay terminal devices connected to the first terminal device is 3, that is, a remaining relay hop count is 1, and the first parameter is 1. In other words, the remote UE 1 may be further used as a relay terminal device to provide a relay service for another UE, but can support only a UE directly connected to the remote UE 1. For another example, when the first terminal device is a remote UE 2, a relay terminal device connected to a single cell to which the first terminal device belongs is a relay UE 1, that is, a remaining relay hop count is 3, and the first parameter is 3.

In this embodiment of this application, the first terminal device may be a terminal device in a connected state, or may be a terminal device in an inactive state/idle state. The following describes a process of determining the first parameter based on the foregoing two cases of the first terminal device.

Manner 1: The first terminal device may be a terminal device in a connected state, or may be a terminal device in an inactive/idle state.

A1: The first terminal device receives a third parameter from a first relay terminal device.

The first relay terminal device provides a relay service for the first terminal device. Further, the first relay terminal device is connected to the first terminal device through a first link, and the first link is a link between devices. For example, the first link may be a sidelink. That is, the first relay terminal device is a relay terminal device that is directly connected to the first terminal device and that provides the relay service for the first terminal device. FIG. 6 is used as an example. When the first terminal device is a relay UE 3, the first relay terminal device is a relay UE 2. When the first terminal device is a remote UE 1, the first relay terminal device is a relay UE 3.

The third parameter indicates a quantity of relay terminal devices between the first relay terminal device and an access network device, or a remaining relay hop count. The following describes the third parameter based on two possible indication cases of the third parameter.

Case 1: The third parameter indicates a quantity of relay terminal devices between the first relay terminal device and the access network device. FIG. 6 is used as an example. When the first terminal device is a relay UE 2 or a remote UE 2, and the first relay terminal device is a relay UE 1, the quantity of relay terminal devices between the relay UE 1 and the access network device is 0, that is, the third parameter is 0. The relay UE 1 indicates the third parameter to the relay UE 2 or the remote UE 2, that is, indicates that a hop count between the relay UE 1 and the access network device is 0. For another example, when the first terminal device is a relay UE 3, and the first relay terminal device is a relay UE 2, the relay terminal device between the relay UE 2 and the access network device is a relay UE 1, that is, the third parameter of the first relay terminal device is 1. The relay UE 2 indicates the third parameter to the relay UE 3, that is, indicates that a hop count between the relay UE 2 and the access network device is 1.

Case 2: The third parameter indicates a remaining relay hop count. FIG. 6 is used as an example. The first terminal device is a relay UE 2 or a remote UE 2, the first relay terminal device is a relay UE 1, and a maximum hop count of a relay terminal device supported in a single cell to which the first relay terminal device belongs is 5, the relay UE 1 is directly connected to the access network device, that is, a hop count of a relay terminal device that can be further connected to the relay UE 1 currently is 5. Correspondingly, the third parameter sent by the first relay terminal device to the first terminal device is 5. For another example, when the first terminal device is a relay UE 3, the first relay terminal device is a relay UE 2, and a maximum hop count of a relay terminal device supported in a single cell to which the first relay terminal device belongs is 5, a hop count of a relay terminal device connected to the relay UE 2 is 1, that is, a remaining relay hop count of the first relay terminal device is 4, that is, a maximum of four hops of relay terminal devices may be further connected in addition to the relay UE 2. Correspondingly, the third parameter sent by the first relay terminal device to the first terminal device is 4.

Based on content of the case 1 and the case 2 of the third parameter, the third parameter may be an indication case in the case 1, or may be an indication case in the case 2. In other words, the case 1 and the case 2 of the third parameter are parallel.

After determining the third parameter, the first relay terminal device sends the third parameter to the first terminal device.

A2: The first terminal device determines the first parameter based on the third parameter.

When the third parameter indicates the quantity of relay terminal devices between the first relay terminal device and the access network device, the first terminal device receives the third parameter N, and determines that the first parameter indicating the quantity of relay terminal devices between the first terminal device and the access network device is N+1. In addition, when the third parameter indicates the remaining relay hop count, the first terminal device determines, based on the third parameter N, that the remaining relay hop count is N-1.

Manner 2: The first terminal device is a terminal device in a connected state.

B1: The first terminal device receives a fourth parameter from the access network device.

The fourth parameter indicates a quantity of relay terminal devices between the first terminal device and the access network device, or a remaining relay hop count. The following describes the third parameter based on two possible indication cases of the fourth parameter.

Case 1: The fourth parameter indicates a quantity of relay terminal devices between the first terminal device and the access network device. FIG. 6 is used as an example. The first terminal device is a relay UE 2, and the quantity of relay terminal devices between the relay UE 2 and the access network device is 1. In other words, the access network device determines that the fourth parameter is 0, and the access network device indicates the fourth parameter to the relay UE 2, that is, indicates that a hop count between the relay UE 2 and the access network device is 1.

Case 2: The fourth parameter indicates a remaining relay hop count. FIG. 6 is used as an example. When the first terminal device is a relay UE 2, and a maximum hop count of a relay terminal device supported in a single cell to which the first terminal device belongs is 5, the access network device is connected to the relay UE 2 via the relay UE 1, that is, a hop count of a relay terminal device that can be further connected to the relay UE 2 currently is 4. Correspondingly, the fourth parameter sent by the access network device to the first terminal device is 4.

For the two cases, that is, the case 1 and the case 2, of the fourth parameter, the fourth parameter may be an indication case in the case 1 or an indication case in the case 2.

Optionally, after determining the fourth parameter, the access network device sends the fourth parameter to the first terminal device. For example, the access network device may send the fourth parameter to the first terminal device. For example, an RRC message is used for indication.

B2: The first terminal device determines the first parameter based on the fourth parameter.

In an example, when the fourth parameter indicates a quantity of relay terminal devices between the first terminal device and the access network device, the first terminal device receives the fourth parameter N, and determines that the first parameter indicating the quantity of relay terminal devices between the first terminal device and the access network device is N. In addition, when the fourth parameter indicates the remaining relay hop count, the first terminal device determines, based on the fourth parameter N, that the remaining relay hop count is indicated as N.

In another example, when the fourth parameter indicates the quantity of relay terminal devices between the first terminal device and the access network device, the first terminal device receives the fourth parameter N, and the first terminal device may determine that the remaining relay hop count is indicated as M-N, where M is a maximum hop count of a relay terminal device supported in a single cell to which the first terminal device belongs. In addition, when the fourth parameter indicates the remaining relay hop count, the first terminal device determines, based on the fourth parameter, that the quantity of relay terminal devices between the first terminal device and the access network device is M-N.

As described above, when the first terminal device is a terminal device in a connected state or an inactive state/idle state, the first terminal device may determine the first parameter by using the method in the manner 1; or when the first terminal device is a terminal device in a connected state, the first terminal device may determine the first parameter by using the method in the manner 2. To be specific, when the first terminal device is a terminal device in a connected state, the first terminal device may determine the first parameter in the manner 1, or may determine the first parameter in the manner 2. When the first terminal device is a terminal device in an inactive state/idle state, the first terminal device determines the first parameter by using the method in the manner 1.

In some embodiments, when the first terminal device is directly connected to the access network device, the first terminal device may determine that the quantity of relay terminal devices between the first terminal device and the access network device is 0, and generate the first parameter indicating the quantity of relay terminal devices between the first terminal device and the access network device. In addition, the first terminal device may further determine that a hop count of a relay terminal device connected to the first terminal device is 0, and generate an indication of a remaining relay hop count based on the hop count of the connected relay terminal device and a maximum hop count of a relay terminal device supported in a single cell to which the first terminal device belongs, that is, use a difference between the maximum hop count and the hop count of the connected relay terminal device as a hop count of a relay terminal device that can be further connected to the first terminal device.

Optionally, after determining the first parameter, the first terminal device may send the first parameter of the first terminal device to the first served terminal device. The first served terminal device is connected to the first terminal device via a first link, that is, the first served terminal device is a served terminal device directly connected to the first terminal device. FIG. 6 is used as an example. When the first terminal device is a relay UE 1, the first served terminal devices are a remote UE 2 and a relay UE 2. For example, the first terminal device is a relay UE 2, the first relay terminal device is a relay UE 1, and the first served terminal device is a relay UE 3. The relay UE 2 receives the third parameter from the relay UE 1, and determines the first parameter based on the third parameter. The relay UE 2 sends the first parameter to the relay UE 3, and the relay UE 3 may determine, based on the first parameter, a quantity of relay terminal devices between the relay UE 3 and the access network device, or the relay UE 3 may determine, based on the first parameter, a quantity of relay terminal devices that can be further connected to the relay UE 3. For another example, the first terminal device is a relay UE 1, and the first served terminal device is a relay UE 2. The relay UE 1 may directly determine the first parameter, or the relay UE 1 may receive the third parameter from the access network device, and determine the first parameter based on the third parameter. The relay UE 1 sends the first parameter to the relay UE 2, and the relay UE 2 may determine, based on the first parameter, a quantity of relay terminal devices between the relay UE 2 and the access network device, or the relay UE 2 may determine, based on the first parameter, a hop count of a relay terminal device that can be further connected to the relay UE 2.

The first information further includes a first threshold, and the first threshold indicates a quantity of relay terminal devices between the first terminal device and the access network device; or the first threshold may indicate a remaining relay hop count. For example, the first threshold is used to limit a multi-hop count supported in a single cell.

Optionally, the first threshold indicates a range of the quantity of relay terminal devices between the first terminal device and the access network device. For example, the first threshold may be set to [0, 5].

Optionally, the first threshold indicates a maximum value of the quantity of relay terminal devices between the first terminal device and the access network device. For example, the first threshold may be set to a value such as 4, 5, or 6.

Optionally, the first threshold indicates a range of the remaining relay hop count. For example, the first threshold may be set to [1, 4].

Optionally, the first threshold indicates a minimum value of the remaining relay hop. For example, the first threshold may be set to 0.

The foregoing describes the indication information of the first threshold, and the following describes a configuration manner of the first threshold in the first terminal device.

In this embodiment of this application, the first threshold may be predefined in a protocol, or may be configured by the access network device, or may be configured by using a system message, or may be a default configuration of the first terminal device, or may be indicated by the first relay terminal device. For example, the access network device may indicate the first threshold to the first terminal device, so that the first terminal device is configured with the first threshold. For example, the first terminal device may obtain the first threshold from RRC configuration information of the access network device. For another example, the first terminal device may obtain the first threshold from a system message (System Information Block, SIB) sent by the access network device.

Optionally, the first information further includes signal quality. Further, the signal quality may be SL signal quality or Uu signal quality. For example, when the first terminal device is directly connected to the access network device, the Uu signal quality between the first terminal device and the access network device is determined. When the first terminal device is not directly connected to the access network device, the SL signal quality between the first terminal device and the first relay terminal device is determined. For example, the signal quality may include reference signal received power (Reference Signal Received Power, RSRP).

S502: The first terminal device sends a first discovery message based on the first information. The first information includes a part or all of the first parameter, the first threshold, and the signal quality.

In this embodiment of this application, the first terminal device may send the first discovery message in the following manners:

Manner 1: The first terminal device sends the first discovery message based on the first parameter and the first threshold. For example, when the first parameter indicates the quantity of relay terminal devices between the first terminal device and the access network device, the first threshold indicates a maximum value of the quantity of relay terminal devices between the first terminal device and the access network device. For another example, when the first parameter indicates the remaining relay hop count, that is, a hop count of a relay terminal device that can be further connected to the first terminal device currently, in a possible implementation, the first threshold may be 0 by default.

The first terminal device determines, by determining whether the first parameter reaches the first threshold, whether to send the first discovery message. For example, the first terminal device may determine, by determining whether the quantity of relay terminal devices between the first terminal device and the access network device is less than the maximum value of the quantity of relay terminal devices between the first terminal device and the access network device, whether to send the first discovery message. The first terminal device may further determine, by determining whether the quantity of relay terminal devices between the first terminal device and the access network device is within a range of the quantity of relay terminal devices between the first terminal device and the access network device, whether to send the first discovery message. Alternatively, the first terminal device may determine, by determining whether the hop count of the relay terminal device that can be further connected to the first terminal device currently is greater than a minimum value of the hop count of the relay terminal device that can be further connected to the first terminal device currently, whether to send the first discovery message.

Optionally, when the quantity of relay terminal devices between the first terminal device and the access network device is less than a maximum value of the quantity of relay terminal devices between the first terminal device and the access network device, the first terminal device determines that the first terminal device may be used as a relay terminal device to provide a relay service for another terminal device, and a quantity of relay terminal devices between the another terminal device and the access network device does not exceed the maximum value of the relay terminal device between the first terminal device and the access network device. Further, when determining that the first terminal device may be used as a relay terminal device to provide a relay service for another terminal device, the first terminal device performs the discovery procedure, and sends the first discovery message.

Alternatively, when the quantity of relay terminal devices between the first terminal device and the access network device is greater than or equal to the maximum value of the quantity of relay terminal devices between the first terminal device and the access network device, and the first terminal device determines that the first terminal device is used as a relay terminal device to provide a relay service for another terminal device, a quantity of relay terminal devices between the another terminal device and the access network device exceeds the maximum value of the relay terminal device between the first terminal device and the access network device. In this way, a quality of service requirement of the first terminal device may not be ensured, and uncertainty of quality of service of the relay service provided by the first terminal device for the another terminal device increases, and a communication capacity that can be provided by the access network device decreases. Therefore, the first terminal device determines that the first terminal device cannot be used as a relay terminal device to provide a relay service for another terminal device, to ensure quality of service of the relay service. Further, when determining not to provide the relay service for the another terminal device, the first terminal device stops performing the discovery procedure, and stops sending the first discovery message.

Optionally, when the first terminal device determines that the quantity of relay terminal devices between the first terminal device and the access network device is within a range of the quantity of relay terminal devices between the first terminal device and the access network device, the first terminal device may further determine that the first terminal device may be used as a relay terminal device to provide a relay service for another terminal device, and a quantity of relay terminal devices between the another terminal device and the access network device does not exceed a range of the relay terminal device between the first terminal device and the access network device. Further, when determining that the first terminal device may be used as a relay terminal device to provide a relay service for another terminal device, the first terminal device performs the discovery procedure, and sends the first discovery message.

Alternatively, when the first terminal device determines that the quantity of relay terminal devices between the first terminal device and the access network device exceeds a range of the quantity of relay terminal devices between the first terminal device and the access network device, the first terminal device may further determine that the first terminal device provides a relay service for another terminal device, and a quantity of relay terminal devices between the another terminal device and the access network device exceeds a range of the relay terminal device between the first terminal device and the access network device. In this way, the first terminal device cannot provide a good relay service for the another terminal device. Therefore, the first terminal device stops performing the discovery procedure, and stops sending the first discovery message, to ensure quality of service of the relay service.

Optionally, when the hop count of the relay terminal device that can be further connected to the first terminal device currently is within a range of the remaining hop count of the connectable relay hop count device, the first terminal device determines that the first terminal device may further provide a relay service for another terminal device. Further, when determining that the first terminal device may be used as a relay terminal device to provide a relay service for another terminal device, the first terminal device performs the discovery procedure, and sends the first discovery message.

Alternatively, when the hop count of the relay terminal device that can be further connected to the first terminal device does currently is not within a range of the remaining relay hop count, the first terminal device determines that the hop count of the relay terminal device currently connected to the first terminal device reaches a limited value of the first terminal device, and cannot provide a relay service for another terminal device. Further, when determining that the first terminal device may be used as a relay terminal device to provide a relay service for another terminal device, the first terminal device performs the discovery procedure, and sends the first discovery message.

Optionally, when the hop count of the relay terminal device that can be further connected to the first terminal device currently is greater than a minimum value of the remaining relay hop count, the first terminal device determines that the first terminal device may further provide a relay service for another terminal device. Further, when determining that the first terminal device may be used as a relay terminal device to provide a relay service for another terminal device, the first terminal device performs the discovery procedure, and sends the first discovery message.

Alternatively, when the hop count of the relay terminal device that can be further connected to the first terminal device currently is less than or equal to a minimum value of the remaining relay hop count, the first terminal device determines that the hop count of the relay terminal device currently connected to the first terminal device is already equal to a maximum value of the hop count of the connectable relay terminal device, and cannot be connected to the relay terminal device. That is, when determining that the first terminal device cannot be used as a relay terminal device to provide a relay service for another terminal device, the first terminal device stops performing the discovery procedure, and stops sending the first discovery message.

Manner 2: The first terminal device sends the first discovery message based on the signal quality.

The first terminal device may determine, by determining whether the signal quality is within a signal quality range, whether to send the first discovery message. For example, the signal quality range may be configured by the access network device for the first terminal device, or may be configured by using a system message, or may be a default configuration of the first terminal device. The signal quality includes Uu signal quality and SL signal quality, and the signal quality range includes a Uu signal quality range and an SL signal quality range.

In some examples, when the first terminal device is directly connected to the access network device, the first terminal device sends the first discovery message when determining that the Uu signal quality is within the Uu signal quality range. For example, when the Uu signal quality is within the Uu signal quality range, the first terminal device may perform the discovery procedure, to provide a terminal service for another terminal device.

Manner 3: The first terminal device sends the first discovery message based on the first parameter, the first threshold, and the signal quality.

Optionally, the first terminal device sends the first discovery message when determining that the first parameter does not reach the first threshold and the signal quality is within the signal quality range.

In some examples, when the first terminal device is directly connected to the access network device, the first terminal device performs the discovery procedure when determining that the first parameter does not reach the first threshold and the Uu signal quality is within the Uu signal quality range. The Uu signal quality is signal quality of a Uu link between the first terminal device and the access network device.

In some other examples, when the first terminal device is not directly connected to the access network device, the first terminal device performs the discovery procedure when determining that the first parameter does not reach the first threshold and the SL signal quality is within the SL signal quality range. The SL signal quality is signal quality of an SL link between the first terminal device and the first relay terminal device.

In the foregoing embodiment, the first terminal device determines, based on the first parameter and the first threshold, whether the relay terminal device between the first terminal device and the access network device has reached a limit of the maximum value, to further determine whether to perform the discovery procedure to provide a relay service for another terminal device. In this way, a scale of multi-hop relays in a network can be restricted, to avoid a case in which a subsequently accessed remote terminal device needs to communicate with the access network device via a large quantity of relay terminal devices, thereby ensuring quality of service of the relay service, and ensuring communication quality between the subsequently accessed remote terminal device and the access network device.

The foregoing describes a manner in which the first terminal device sends the first discovery message. The first terminal device may send the first discovery message by using the method in the manner 1, or may send the first discovery message by using the method in the manner 2, or may send the first discovery message by using the method in the manner 3.

In an existing L2 U2N relay technology, an access network device allocates a local ID to each remote terminal device, to identify the remote terminal device in a current network device. A value of the local ID determines a quantity of remote terminal devices that can be connected to the relay terminal device. For example, the current local ID is 8 bits. Therefore, in the R17 SL relay, a maximum quantity of remote terminal devices that can be connected to one relay terminal device is 256. A quantity of terminal devices that obtain the relay service needs to be limited, to ensure that the relay terminal can provide a good relay service.

In this embodiment of this application, the discovery procedure is initiated by the first terminal device, and the first terminal device is the same as the first terminal device in the embodiment shown in FIG. 5. The terminal device that obtains the relay service of the first terminal device may be referred to as a served terminal device. The second parameter may indicate a quantity of served terminal devices. FIG. 7 is used as an example. When the first terminal device is a relay UE 1, the served terminal devices are a relay UE 2, a remote UE 1, a relay UE 3, a relay UE 4, a remote UE 2, and a remote UE 3.

The served terminal device of the first terminal device may be a served terminal device in a connected state; or the served terminal device of the first terminal device includes the served terminal device in the connected state and a served terminal device in a non-connected state, where the non-connected state includes an inactive state and/or an idle state. The following describes a process of determining the second parameter based on the foregoing two possible cases included in the served terminal device of the first terminal device.

Manner A: The served terminal device of the first terminal device may include a served terminal device in a connected state, and may further include a served terminal device in an idle state and a served terminal device in an inactive state.

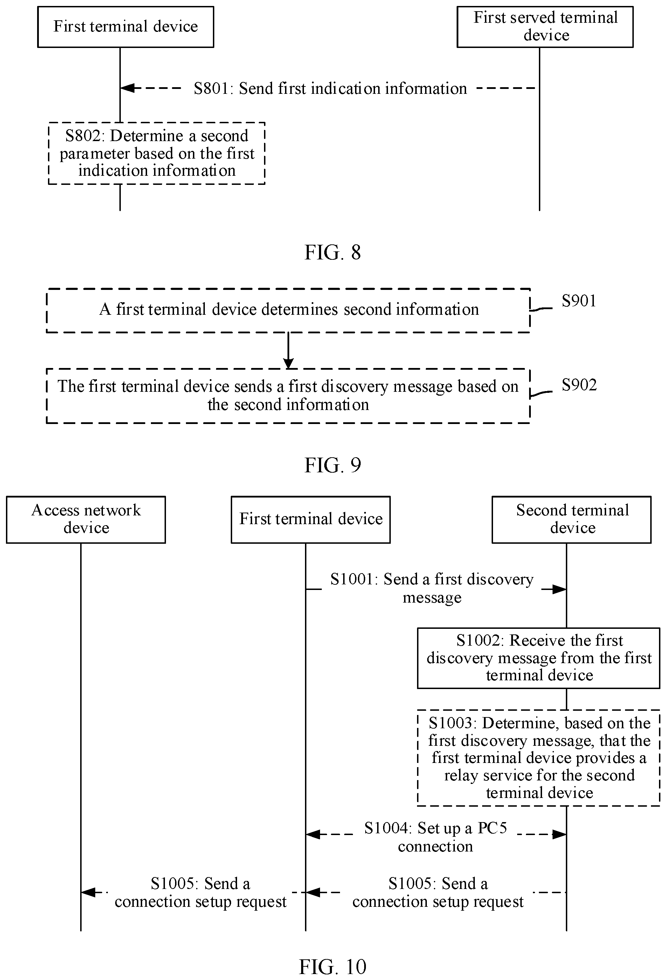

FIG. 8 is a schematic flowchart of determining a second parameter by a first terminal device. As shown in FIG. 8, the procedure includes the following content.

S801: A first terminal device receives first indication information from a first served terminal device, and the first served terminal device sends the first indication information to the first terminal device.

The first indication information indicates a quantity of terminal devices that are connected to the first served terminal device and that obtain a relay service of the first served terminal device; or indicates a quantity of terminal devices that are connected to the first served terminal device and that obtain a relay service of the first served terminal device plus a quantity of first served terminal devices. The first served terminal device is a terminal device that is connected to the first terminal device via a first link and that obtains the relay service of the first terminal device. Further, the first link is a link between devices, for example, a sidelink. FIG. 7 is used as an example. When the first terminal device is a relay UE 1, the first served terminal devices are a relay UE 2 and a relay UE 3 (a remote terminal device is not included). For another example, the first terminal device is a relay UE 3, and the first served terminal device is a relay UE 4. For another example, when the first terminal device is a relay UE 1, the first served terminal devices are a relay UE 2, a relay UE 3, and a remote UE 3 (a remote terminal device is included). In this embodiment of this application, the first service terminal device may not include a remote terminal device, or may include a remote terminal device.

S802: The first terminal device determines a second parameter based on the first indication information.

In some examples, the first terminal device collects statistics on a quantity of served terminal devices based on the received first indication information, to obtain the second parameter. FIG. 7 is used as an example. The first terminal device is a relay UE 1, and the first served terminal devices are a relay UE 2 and a relay UE 3. The relay UE 1 receives first indication information from the relay UE 2 and the relay UE 3, where the first indication information of the relay UE 2 indicates 1, and the first indication information of the relay UE 3 indicates 2. The relay UE 1 determines, based on the received first indication information, that the second parameter is 6. When statistics on the second parameter is collected, the remote UE 3 that is not used for indication further needs to be added.

For another example, if the first indication information includes the first served terminal and the remote terminal device, the relay UE 1 receives first indication information from the relay UE 2, the relay UE 3, and the remote UE 3, where the first indication information of the relay UE 2 indicates 2, the first indication information of the relay UE 3 indicates 3, and the first indication information of the remote UE 3 indicates 1. The first terminal device collects statistics on a quantity of served terminal devices based on the received first indication information, and determines that the second parameter is 6.

Manner B: The served terminal device of the first terminal device includes a served terminal device in a connected state.

Optionally, the first terminal device may determine, based on relay configuration information of the access network device, a quantity of served terminal devices in the connected state. The relay configuration information is used by the first terminal device to forward data of the served terminal device, for example, relay forwarding information, and includes identification information of the served terminal device of the first terminal device and a corresponding relay forwarding configuration. FIG. 7 is used as an example. The first terminal device is a relay UE 1, and the served terminal devices in the connected state of the first terminal device are a relay UE 2, a remote UE 1, a relay UE 3, a relay UE 4, a remote UE 2, and a remote UE 3. The first terminal device may determine, based on the relay configuration information, that the quantity of served terminal devices in the connected state is 6.

The first terminal device uses the quantity of served terminal devices in the connected state as the second parameter.

Manner C: The served terminal device of the first terminal device includes a served terminal device in a non-connected state and a served terminal device in a connected state.

Optionally, the first terminal device may determine, based on relay configuration information of the access network device, a quantity of served terminal devices in the connected state. A determining process is the same as that in the manner 2. Details are not described herein again.

Optionally, the first terminal device may further receive second indication information from the first served terminal device, where the second indication information includes identification (identification, ID) information of the first served terminal device and/or ID information of a second served terminal device. In an example, the ID information is used to forward a paging (paging) message, for example, an S-TMSI or an I-RNTI, and the second served terminal device is a served terminal device in a non-connected mode of the first served terminal device. In this embodiment of this application, the first served terminal device may be a remote terminal device in a non-connected state, or may be a relay terminal device in a connected state, or may be a relay terminal device in a non-connected state. The following describes the second indication information based on the foregoing three first served terminal devices.

When the first served terminal device is the remote terminal device in the non-connected state, the second indication information includes ID information of the first served terminal device.

Alternatively, when the first served terminal device is the relay terminal device in the connected state, the second indication information includes ID information of the second served terminal device.

Alternatively, when the first served terminal device is the relay terminal device in the non-connected state, the second indication information includes ID information of the first served terminal device and ID information of the second served terminal device.

After obtaining the ID information, the first terminal device determines a quantity of served terminal devices in the non-connected state based on the ID information. Further, when the served terminal device of the first terminal device includes the served terminal device in the connected state and the served terminal device in the non-connected state, the first terminal device uses a sum of a quantity of served terminal devices in the connected state and a quantity of served terminal devices in the non-connected state as the second parameter. For example, the first terminal device may determine the quantity of served terminal devices in the connected state in the manner B.

The first terminal device may determine the second parameter in the manner A, the manner B, and the manner C, or may determine the third parameter in the manner B and the manner C, or may determine the second parameter in another manner. This is not limited in this application. After determining the second parameter, the first terminal device may further send the second parameter of the first terminal device to the first relay terminal device (if existent).

The first relay terminal device provides a relay service for the first terminal device, and the first relay terminal device is connected to the first terminal device via a first link. For example, the remote UE 1 is connected to the access network device via the relay UE 1 and the relay UE 2. When the UE 2 is the first terminal device, the first relay terminal device is the relay UE 1.

After determining the second parameter, the first terminal device may further determine whether the first terminal device can provide a relay service for another terminal device.

FIG. 9 is another schematic flowchart of a communication method according to an embodiment of this application. As shown in FIG. 9, the following steps are included.

S901: A first terminal device determines second information.

The second information may indicate a quantity of served terminal devices of the first terminal device.

Optionally, the second information may include a second parameter. Further, the first terminal device may determine the second parameter in the foregoing manners A, B, and C, to obtain the second information.

Optionally, the second information further includes a second threshold. The second threshold indicates a quantity of served terminal devices of the first terminal device. For example, the second threshold is used to limit the quantity of served terminal devices of the first terminal device.

Optionally, the second threshold indicates a range of the quantity of served terminal devices of the first terminal device, that is, a range of a quantity of terminal devices that obtain a relay service of the first terminal device.

Optionally, the second threshold indicates a maximum value of the quantity of served terminal devices of the first terminal device, that is, a maximum value of the quantity of terminal devices that obtain the relay service of the first terminal device.

In this embodiment of this application, the second threshold may be configured by the access network device for the first terminal device, or may be sent by the first relay terminal device to the first terminal device, or may be configured for the first terminal device by using a system message, or may be a default configuration of the first terminal device. A configuration process of the second threshold is the same as the configuration process of the first threshold in Embodiment 1. For details, refer to the description of the configuration process of the first threshold in

### Embodiment 1.

S902: The first terminal device sends a first discovery message based on the second information. The first discovery message indicates that the first terminal device provides the relay service.

The first terminal device may send the first discovery message based on the second parameter and the second threshold. For example, the first terminal device may determine, by determining whether the second parameter reaches the second threshold, whether to perform a discovery procedure. The discovery procedure includes a procedure of sending a first message or a procedure of accessing a remote terminal device.

When the second parameter reaches the second threshold, the first terminal device stops providing the relay service. For example, when the second parameter reaches the second threshold, the first terminal device no longer sends the first discovery message, or rejects access of the remote terminal device. For example, the first terminal device may reject a DCR message of the remote terminal device. For example, the remote terminal device sends the DCR message to the first terminal device. After receiving the DCR message of the remote terminal device, the first terminal device determines, based on an L2 ID corresponding to the DCR message or an RSC included in the DCR message, that the accessed terminal device expects to obtain the relay service. After determining that the second parameter reaches the second threshold and stopping providing the relay service, the first terminal device rejects the DCR message for accessing the remote terminal device.

Optionally, that the second parameter reaches the second threshold may be that the second parameter is not within a range of the quantity of served terminal devices of the first terminal device, or may be that the second parameter is greater than or equal to a maximum value of the quantity of served terminal devices of the first terminal device.

When the second parameter does not reach the second threshold, the first terminal device sends the first discovery message, to prepare to provide the relay service for another remote terminal device. In this way, a case in which a new access connection is rejected due to an excessively large quantity of served terminal devices currently served by the first terminal device can be avoided, so that an RRC connection failure probability of the UE can be reduced, and quality of service of the relay service can be improved.

Optionally, that the second parameter does not reach the second threshold may be that the second parameter is within a range of the quantity of served terminal devices of the first terminal device, or may be that the second parameter is less than a maximum value of the quantity of served terminal devices of the first terminal device.

In this embodiment of this application, when the first terminal device is a relay terminal device directly connected to the access network device, the first terminal device determines, based on the second parameter, whether to send the first discovery message. When the first terminal device is a terminal device that is not directly connected to the access network device, the first terminal device may determine, based on the second parameter, whether to send the first discovery message, or may determine, based on the indication information sent by the first relay terminal device, whether to send the first discovery message. The following describes, based on the foregoing two possible cases, a process of determining whether to send the first discovery message.

Case 1: The first terminal device is a relay terminal device directly connected to the access network device.

In a process in which the first terminal device sends the first discovery message, as a served terminal device accesses or leaves, the quantity of served terminal devices of the first terminal device continuously changes. The first terminal device may update the second parameter in real time in the procedures of the foregoing manners A, B, and C. For example, a new served terminal device accesses the first terminal device. When the new served terminal device is a served terminal device in a connected state, the access network device updates relay configuration information of the first terminal device, and the first terminal device determines a quantity of currently served terminal devices based on updated relay configuration information.

The first terminal device determines, based on the second parameter and the second threshold, whether to stop sending the first discovery message. For example, the first terminal device determines, based on a current value of the second parameter and the second threshold, whether to stop sending the first discovery message.

Optionally, when determining that the current value of the second parameter does not reach the second threshold, the first terminal device continues to send the first discovery message.

Optionally, when determining that the current value of the second parameter reaches the second threshold, the first terminal device stops providing the relay service. Stopping providing the relay service includes stopping sending the first discovery message or rejecting access of the remote terminal device. The first terminal device may further send first stop indication information to a first served terminal device, where the first stop indication information indicates that no additional relay service is provided. Correspondingly, after receiving the first stop indication information, the first served terminal device stops providing the relay service. The first served terminal device continues to send, to the served terminal device that obtains the first served terminal device, indication information indicating that an additional relay service is no longer provided, until all served terminal devices of the first terminal device stop providing the relay service. FIG. 7 is used as an example. The first terminal device is a relay UE 1. After determining that the second parameter reaches the second threshold, the relay UE 1 stops providing an additional relay service, and sends the first stop indication information to the relay UE 2, the relay UE 3, and the remote UE 3. After receiving the first stop indication information, the relay UE 2, the relay UE 3, and the remote UE 3 stop providing an additional relay service. In addition, the relay UE 2 sends, to the remote UE 1, indication information indicating that an additional relay service is no longer provided, so that the remote UE 1 no longer provides an additional relay service. The relay UE 3 sends, to the relay UE 4, indication information indicating that an additional relay service is no longer provided, so that the relay UE 4 no longer provides an additional relay service. The relay UE 4 sends, to the remote UE 2, indication information indicating that an additional relay service is no longer provided, so that the remote UE 2 no longer provides an additional relay service.

Optionally, when determining that the current value of the second parameter reaches the second threshold, the first terminal device suspends providing of the relay service. Suspending providing of the relay service includes temporarily stopping sending the first discovery message or temporarily rejecting access of the remote terminal device.

After the first terminal device stops sending the first discovery message, or in a process in which the first terminal device suspends sending of the first discovery message, the served terminal device may leave and access the first terminal device, and the quantity of served terminal devices of the first terminal device continuously changes. The first terminal device may update the second parameter in real time in the procedures of the foregoing manners A, B, and C. The first terminal device may determine, based on the second parameter and the second threshold, whether to resume sending the first discovery message.

Optionally, the first terminal device determines, by determining whether the current value of the second parameter is less than the second threshold, whether to resume sending the first discovery message.

When determining that the current value of the second parameter does not reach the second threshold, the first terminal device resumes sending the first discovery message. In addition, the first terminal device sends first resume indication information to the first served terminal device, where the first resume indication information indicates that an additional relay service is provided.

In another example, a hysteresis value/offset may be set to avoid frequent status updates of the first terminal device caused by access and leaving of the remote terminal device. Optionally, the hysteresis value/offset is less than the second threshold, and the hysteresis value/offset is an integer. For example, the first terminal device may further determine, based on the current value of the second parameter, the second threshold, and the hysteresis value/offset, whether to resume sending the first discovery message.

After determining that the current value of the second parameter does not reach the second threshold, the first terminal device determines, by determining whether the current value is less than (or equal to) the hysteresis value/offset, whether to resume sending the first discovery message. In some examples, after determining that the current value of the second parameter is not less than the hysteresis value/offset, the first terminal device continues to stop sending the first discovery message. In some other examples, when determining that the current value of the second parameter is less than the hysteresis value/offset, the first terminal device resumes sending the first discovery message. In another possible manner, after determining that the current value of the second parameter is less than the second threshold, the first terminal device determines, by determining whether the current value is less than (or equal to) (the second threshold - the hysteresis value/offset), whether to resume sending the first discovery message. In some examples, after determining that the current value of the second parameter is not less than (or greater than or equal to) (the second threshold - the hysteresis value/offset), the first terminal device continues to stop sending the first discovery message. In some other examples, when determining that the current value of the second parameter is less than the hysteresis value/offset, the first terminal device resumes sending the first discovery message. The first terminal device may further send first resume indication information to the first served terminal device, where the first resume indication information indicates that an additional relay service is provided. Correspondingly, after receiving the first resume indication information, the first served terminal device sends, to the terminal device that obtains the relay service of the first served terminal device, indication information indicating that an additional relay service is provided, until all served terminal devices of the first terminal device resume providing the relay service.

Optionally, when there is a link between the first terminal device and the served terminal device, the first terminal device may further directly send the first stop indication information or the first resume indication information to the served terminal device of the first terminal device.

Case 2: The first terminal device is a terminal device that is not directly connected to the access network device.

In a process in which the first terminal device sends the first discovery message, a new remote terminal device accesses a cell to which the first terminal device belongs. When a relay capacity of the relay terminal device directly connected to the access network device reaches an upper limit, the relay terminal device directly connected to the access network device stops providing the relay service. For example, that the first terminal device stops providing the relay service may be that the first terminal device suspends providing of the relay service. A manner of determining that the relay capacity of the relay terminal device directly connected to the access network device reaches the upper limit is the same as a process in which the first terminal device determines that the second parameter reaches the second threshold in Case 1. Details are not described herein again.

In an example, the first terminal device receives second stop indication information from the first relay terminal device, and stops sending the first discovery message, where the second stop indication information indicates that an additional relay service is no longer provided. For example, after receiving the second stop indication information, the first terminal device may further reject access of the terminal device (the terminal device is a newly accessed terminal). The first terminal device may further send third stop indication information to the first served terminal device, where the third stop indication information indicates that an additional relay service is no longer provided. Correspondingly, after receiving the third stop indication information, the first served terminal device stops providing the additional relay service, and sends, to the terminal device that obtains the relay service of the first served terminal device, indication information for stopping providing the additional relay service, until all terminal devices that obtain the relay service of the relay terminal device directly connected to the access network device stop the relay service.

In an example, the first terminal device may further receive second resume indication information from the first relay terminal device. The first terminal device may resume sending the first discovery message based on the second resume indication information. The second resume indication information indicates that an additional relay service is provided. For example, after receiving the second resume indication information, the first terminal device sends the first discovery message. The first terminal device may further send third resume indication information to the first served terminal device, where the third resume indication information indicates that an additional relay service is provided. Correspondingly, after receiving the third resume indication information, the first served terminal device continues to provide the relay service, and sends, to the terminal device that obtains the relay service of the first served terminal device, indication information for resuming providing the additional relay service, until all terminal devices that obtain the relay service of the relay terminal device directly connected to the access network device resume providing the relay service.

In the embodiments shown in FIG. 8 and FIG. 9, the first terminal device may determine, based on the quantity of served terminal devices, whether to perform a relay procedure, to avoid a problem that the terminal device cannot perform access because a capacity of the first terminal device reaches an upper limit, thereby ensuring quality of service of the relay service.

The embodiment shown in FIG. 5 may be applied in combination with the embodiments shown in FIG. 8 and FIG. 9. The following describes an embodiment obtained by combining the foregoing two embodiments.

Optionally, the first terminal device may receive relay configuration information of an access network device, determine that the first terminal device has a relay capability, and may provide a relay service for another terminal device.

The first terminal device may send a first discovery message based on first information and second information. The first information is the same as the first information in Embodiment 1, and the first information includes one or more of a first parameter, a first threshold, and signal quality. The second information is the same as the second information in Embodiment 2, and includes a second parameter and a second threshold. For a process of determining the first parameter in Embodiment 3, refer to the process of determining the first parameter in Embodiment 1, and the process of determining the second parameter in Embodiment 2. Details are not described herein again.

In an example, the first terminal device may send the first discovery message based on the first parameter, the first threshold, the second parameter, and the second threshold. Further, the first terminal device sends the first discovery message when determining that the first parameter does not reach the first threshold and the second parameter does not reach the second threshold. Correspondingly, when the foregoing condition is not met, the first terminal device stops sending the first discovery message, and stops providing the relay service. Stopping sending the first discovery message includes suspending sending of the first discovery message, and stopping providing the relay service includes suspending providing of the relay service.

In an example, the first terminal device may send the first discovery message based on the signal quality, the second parameter, and the second threshold. Further, the first terminal device sends the first discovery message after determining that the signal quality is within a signal quality range and the second parameter does not reach the second threshold. For example, when the first terminal device is directly connected to the access network device, the signal quality is Uu signal quality, and the signal quality range is a Uu signal quality range; or when the first terminal device is not directly connected to the access network device, the signal quality is SL signal quality, and the signal quality range is an SL signal quality range. Correspondingly, when the foregoing condition is not met, the first terminal device stops sending the first discovery message, and stops providing the relay service.

In an example, the first terminal device may send the first discovery message based on the signal quality, the first parameter, the first threshold, the second parameter, and the second threshold. Further, the first terminal device sends the first discovery message when the signal quality is in the signal quality range, the first parameter does not reach the first threshold, and the second parameter does not reach the second threshold. Correspondingly, when the foregoing condition is not met, the first terminal device stops sending the first discovery message, and stops providing the relay service.

In the foregoing content, the first terminal device determines, based on the signal quality, the hop count information of the first terminal device, and the quantity of served terminal devices connected to the first terminal device, whether to send the first discovery message. This can avoid a case in which a remote terminal device newly accessed by the first terminal device needs to communicate with the access network device via a large quantity of relay terminal devices, and can further avoid a problem that access of a subsequent remote terminal device fails because too many remote terminal devices access the first terminal device, thereby ensuring quality of service of the relay service, and ensuring communication quality between the remote terminal device that obtains the relay service of the first terminal device and the access network device.

In a multi-hop relay scenario, a terminal device in a non-connected state reports ID information of the terminal device to a previous-hop relay terminal device of the terminal device, and the previous-hop relay terminal device transfers the ID information layer by layer until the ID information is transferred to a relay terminal device directly connected to the access network device.

An example in which the first terminal device may transfer the ID information to the first relay terminal device is used for description. The first relay terminal device provides a relay service for the first terminal device.

The first terminal device may send third indication information to the first relay terminal device, where the third indication information includes identification information of the first terminal device and/or identification information of a third served terminal device, and the third served terminal device is a terminal device in an inactive state and/or an idle state that is of the first terminal device and that obtains the relay service of the first terminal device.

In an example, the first terminal device may be a remote terminal device in a non-connected state, or may be a relay terminal device in a connected state, or may be a relay terminal device in a non-connected state. Content of the third indication information varies with a type of the first terminal device. The content of the third indication information is the same as that of the second indication information. For details, refer to the description of the second indication information in Embodiment 2.

FIG. 7 is used as an example. The relay UE 2, the relay UE 4, and the remote UE 1 are terminal devices in an inactive state/idle state, and the relay UE 1, the relay UE 3, the remote UE 2, and the remote UE 3 are terminal devices in a connected state.

The remote UE 1 sends, to the relay UE 2, second indication information 1 indicating the ID information of the remote UE 1. The relay UE 2 receives the second indication information 1, generates an ID list 1, and adds the ID information of the remote UE 1 and the ID information of the relay UE 2 to the ID list 1. The relay UE 2 sends, to the relay UE 1, second indication information 2 indicating the ID list 1. Based on the second indication information 1 and the second indication information 2, the relay UE 2 and the relay UE 1 may help monitor paging information of the remote UE 1, and forward the paging information. For example, after monitoring the paging information of the remote UE 1, the relay UE 1 forwards the paging information of the remote UE 1 to the relay UE 2 based on the second indication information 2, and then the relay UE 2 forwards the paging information of the remote UE 1 to the remote UE 1 based on the second indication information 1.

The remote UE 2 sends, to the relay UE 4, second indication information 3 indicating the ID information of the remote UE 2, the relay UE 4 generates second indication information 4, where the second indication information 4 includes the ID information of the remote UE 2 and the ID information of the relay UE 4, and the relay UE 4 sends the second indication information 4 to the relay UE 3. Because the relay UE 3 is in a connected state, the relay UE 3 generates an ID list 2 based on the second indication information 4 of the relay UE 4, and adds the ID information of the relay UE 4 and the ID information of the remote UE 2 to the ID list 2. The relay UE 3 sends, to the relay UE 1, second indication information 5 indicating the ID list 2. Therefore, the relay UE 1 and the relay UE 3 may help monitor and forward paging information of the relay UE 4 and paging information of the remote UE 2, and forward the paging information. For example, after monitoring the paging information of the relay UE 4, the relay UE 1 forwards the paging information of the relay UE 4 to the relay UE 3 based on the second indication information 5 indicated by the relay UE 3, and the relay UE 3 forwards the paging information of the relay UE 4 to the relay UE 4 based on the second indication information 4 indicated by the relay UE 4, to implement paging of the relay UE 4.

Optionally, the relay UE 1 in the connected state integrates, into an ID list 3, the ID information indicated by the received second indication information. The ID list 3 includes ID information of the relay UE 2, ID information of the relay UE 4, ID information of the remote UE 1, and ID information of the remote UE 3, and is reported to the access network device. The access network device sends a paging message of the relay UE 2, the relay UE 4, the remote UE 1, or the remote UE 3 to the relay UE 1 by using an RRC message based on the ID list reported by the relay UE 1, and the relay UE 1 performs forwarding based on the received second indication information 3 or second indication information 4 (a subsequent procedure is similar to the foregoing procedure).

In this embodiment of this application, the ID information of the UE is an S-TMSI or an I-RNTI. When the UE is in an inactive state, the ID information indicates an I-RNTI. When the UE is in an idle state, the ID information indicates an S-TMSI.

Based on the content shown in the foregoing embodiment, the ID information of the terminal device in the inactive state/idle state is transferred layer by layer in the multi-hop scenario, to implement layer-by-layer monitoring of the paging information of the terminal device in the inactive state/idle state, thereby ensuring that the paging information is forwarded to the access network device.

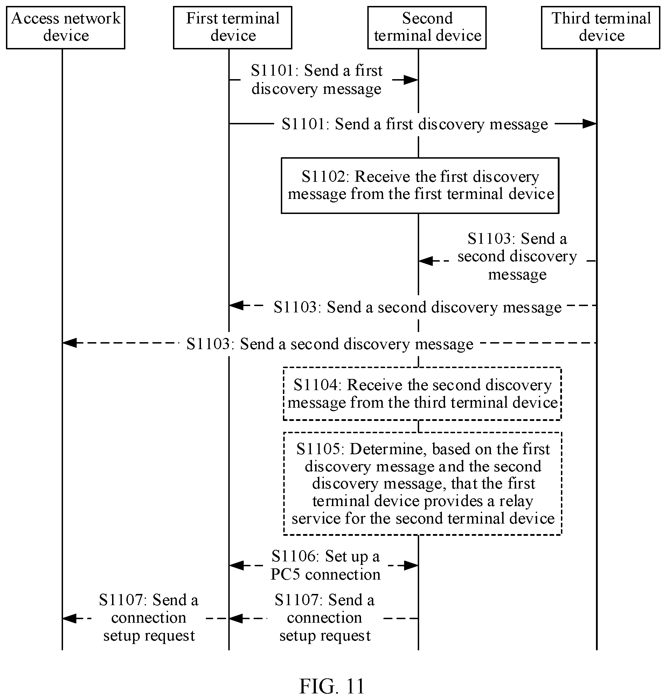

The content shown in the foregoing embodiment may be applied in combination with the embodiment shown in FIG. 5, or may be applied in combination with the embodiments shown in FIG. 8 and FIG. 9. In addition, the content described in the foregoing embodiment may be further applied in combination with the embodiment shown in FIG. 10 and the embodiment shown in FIG. 11.

FIG. 10 is still another schematic flowchart of a communication method according to an embodiment of this application. In Embodiment 5, a discovery procedure is initiated by a first terminal device, and the first terminal device is the same as the first terminal device in Embodiment 1. As shown in FIG. 10, the following steps are included. The embodiment shown in FIG. 10 may be applied in combination with one or more of the embodiment shown in FIG. 5 and the embodiments shown in FIG. 8 and FIG. 9. For example, the embodiment shown in FIG. 10 may be considered as details of the discovery procedure performed by the first terminal device in the embodiment shown in FIG. 5. Further, the first terminal device in the embodiment shown in FIG. 5 may also perform steps performed by a second terminal device shown in FIG. 10.

S1001: The first terminal device sends a first discovery message.

The first discovery message includes a first parameter of the first terminal device, the first parameter indicates hop count information of the first terminal device, and the first discovery message indicates that the first terminal device supports a relay service. A process in which the first terminal device sends the first discovery message is the same as the process in which the first discovery message is sent in Embodiment 1, Embodiment 2, and Embodiment 3. In addition, for a process of determining the first parameter, refer to the process of determining the first parameter in Embodiment 1.

The hop count information indicates a quantity of relay terminal devices between the first terminal device and an access network device; or the hop count information indicates a remaining relay hop count; and the relay terminal device is a terminal device that provides the relay service.

S1002: The second terminal device receives the first discovery message from the first terminal device.

S1003: The second terminal device determines, based on the first discovery message, that the first terminal device provides the relay service for the second terminal device. For example, the second terminal device may select, expect, or request, based on the first discovery message, the first terminal device to provide the relay service for the second terminal device.

Optionally, the second terminal device may determine, based on the first parameter, that the first terminal device provides the relay service for the second terminal device. For example, when determining that the first parameter does not reach a third threshold, the second terminal device determines that the first terminal device provides the relay service for the second terminal device. The first parameter indicates the quantity of relay terminal devices between the first terminal device and the access network device, and the third threshold indicates a quantity of terminal devices between a relay terminal device that provides the relay service for the second terminal device and the access network device. In an example, the third threshold indicates a maximum value of the quantity of terminal devices between the relay terminal device that provides the relay service for the second terminal device and the access network device. For example, when the first parameter is less than or equal to the third threshold, the second terminal device determines to obtain the relay service of the first terminal device. For another example, when determining that the first parameter is greater than a third threshold, the second terminal device determines that the first terminal device does not provide the relay service for the second terminal device. In another example, the third threshold indicates a range of a quantity of terminal devices between a relay terminal device that provides the relay service for the second terminal device and the access network device. For example, when the first parameter is within a range indicated by the third threshold, the second terminal device determines to obtain the relay service of the first terminal device. For another example, when the first parameter is not within a range indicated by the third threshold, the second terminal device determines to obtain the relay service of the first terminal device. In another indication case, the first parameter indicates a remaining relay hop count, and the third threshold indicates a remaining relay hop count of a relay terminal device that provides the relay service for the second terminal device. In an example, the third threshold indicates a minimum value of the remaining relay hop count of the relay terminal device that provides the relay service for the second terminal device. For example, when the first parameter is greater than or equal to a third threshold, the second terminal device determines to obtain the relay service of the first terminal device. For another example, when determining that the first parameter is less than a third threshold, the second terminal device determines that the first terminal device does not provide the relay service for the second terminal device. In another example, the third threshold indicates a range of a remaining relay hop count of a relay terminal device that provides the relay service for the second terminal device. For example, when the first parameter is within a range indicated by the third threshold, the second terminal device determines to obtain the relay service of the first terminal device. For another example, when the first parameter is not within a range indicated by the third threshold, the second terminal device determines to obtain the relay service of the first terminal device.

For ease of description, the following describes, by using an example in which the first parameter indicates a quantity of relay terminal devices between the first terminal device and the access network device, and the third threshold indicates a maximum value of a quantity of terminal devices between the relay terminal device that provides the relay service for the second terminal device and the access network device, a process in which the second terminal device selects a relay terminal device for access.

In an example, the second terminal device may further receive first discovery messages from a plurality of first terminal devices. The second terminal device may sort first parameters of the plurality of first terminal devices. If the first parameter indicates a quantity of relay terminal devices between the first terminal device and the access network device, a first terminal device with a smallest first parameter is selected to provide the relay service for the second terminal device. If the first parameter indicates a remaining relay hop count, a first terminal device with a largest first parameter is selected to provide the relay service for the second terminal device. For another example, when the first parameter indicates the quantity of relay terminal devices between the first terminal device and the access network device, the second terminal device may select, from first terminal devices whose first parameters are less than the third threshold, one first terminal device to provide the relay service for the second terminal device. For another example, when the first parameter indicates the remaining relay hop count, the second terminal device may select, from first terminal devices whose first parameters are greater than the third threshold, one first terminal device to provide the relay service for the second terminal device. The second terminal device may alternatively determine, in another manner based on the first parameter, that the first terminal device provides the relay service for the second terminal device. This is not limited in this application.

In an example, the first discovery message further includes signal quality. The second terminal device screens the plurality of first terminal devices based on SL signal quality of the first terminal device, to obtain a candidate terminal device. A screening condition of the SL signal quality is that the SL signal quality is within a range of the SL signal quality. The second terminal device may further select, from candidate terminal devices, a candidate terminal device with a smallest first parameter to provide the relay service for the second terminal device.

In an example, the first discovery message further includes type information, and the type information indicates a service type of the relay service provided by the first terminal device. For example, the service type may be an air service, or may be a ground service.

S1004: The second terminal device sets up a PC5 connection to the first terminal device.

S1005: The second terminal device sends a connection setup request message to the access network device via the first terminal device, where the connection request setup message is used to set up a connection between the second terminal device and the network device, for example, an RRC connection.

Based on the content shown in FIG. 10, the second terminal device determines, based on the first parameter of the first terminal device, that the first terminal device provides the relay service for the second terminal device. This can avoid an increase in a packet loss probability and a delay caused when the second terminal device accesses first terminal devices of a plurality of relay terminal devices that separate the second terminal device and the access network device, thereby ensuring quality of service of the relay service obtained by the second terminal device, and ensuring communication quality between the second terminal device and the access network device.

In another example, when the second terminal device is a terminal device in a connected state, the second terminal device reports measurement information of the first terminal device to the access network device, and the access network device determines that the first terminal device provides the relay service for the second terminal device. A process in which the second terminal device determines, via the access network device, that the first terminal device provides the relay service for the second terminal device includes the following steps:
C1: The first terminal device sends a first discovery message.
C2: The second terminal device receives the first discovery message from the first terminal device.

C1 and C2 are correspondingly the same as S1001 and S1002 in FIG. 10.

C3: The second terminal device generates the measurement information of the first terminal device based on the first discovery message of the first terminal device.

The measurement information includes one or more of the first parameter, the identification information of the first terminal device, the first parameter, the SL signal quality, the cell ID information of the first terminal device, and the type information.

C4: The second terminal device sends a first message to the access network device, and the access network device receives the first message from the second terminal device.

The first message includes the measurement information of the first terminal device.

C5: The access network device determines, based on the measurement information of the first terminal device, that the first terminal device provides the relay service for the second terminal device.

For an execution process of C5, refer to the foregoing process in which the second terminal device determines that the first terminal device provides the relay service for the second terminal device.

C6: The access network device sends the ID information of the first terminal device to the second terminal device, and the second terminal device receives the ID information of the first terminal device from the access network device.

For example, the access network device may send RRC reconfiguration information to the second terminal device, where the RRC reconfiguration information includes the ID information of the first terminal device.

C7: The second terminal device sets up a PC5 connection to the first terminal device based on the ID information of the first terminal device, and accesses the access network device via the first terminal device. Specifically, the second terminal device sends RRC reconfiguration complete message to the access network device via the first terminal device, where the RRC reconfiguration complete message indicates that configuration is completed.

FIG. 11 is yet another schematic flowchart of a communication method according to an embodiment of this application. As shown in FIG. 11, the following steps are included. The embodiment shown in FIG. 11 may be applied in combination with one or more of the embodiment shown in FIG. 5 and the embodiments shown in FIG. 8 and FIG. 9. For example, the embodiment shown in FIG. 11 may be considered as details of the discovery procedure performed by the first terminal device in the embodiment shown in FIG. 5. Further, the first terminal device in the embodiment shown in FIG. 5 may also perform steps performed by a second terminal device shown in FIG. 11.

S1101: The first terminal device sends a first discovery message.

The first discovery message indicates that the first terminal device provides a relay service. The first discovery message includes ID information of a first relay terminal device, and the first relay terminal device provides the relay service for the first terminal device.

S1102: The second terminal device receives the first discovery message from the first terminal device.

S1103: The third terminal device sends a second discovery message.

The second discovery message indicates that a third terminal device supports the relay service, the second discovery message includes ID information of the first terminal device, and the first terminal device provides the relay service for the third terminal device.

There is no specific sequence of S1101 and S1103.

S1104: The second terminal device receives the second discovery message from the third terminal device.

S1105: The second terminal device determines, based on the first discovery message and the second discovery message, that the first terminal device provides the relay service for the second terminal device.

In an example, the second terminal device determines, based on the received first discovery message and second discovery message, that there are two available relay terminal devices nearby, that is, the first terminal device and the third terminal device. The second terminal device determines, based on the ID information, that the first terminal device provides the relay service for the third terminal device. The second terminal device selects the first terminal device to provide the relay service for the second terminal device, so that a quantity of relay terminal devices that are passed through when the second terminal device communicates with the access network device can be reduced, thereby ensuring quality of the relay service, and ensuring communication quality between the second terminal device and the access network device.

S1106: The second terminal device sets up a PC5 connection to the first terminal device.

S1107: The second terminal device sends a connection setup request message to the access network device via the first terminal device, where the connection request setup message is used to set up a connection between the second terminal device and the network device, for example, an RRC connection.

Based on the content shown in FIG. 11, the second terminal device selects, based on ID information of a previous-hop relay terminal device of a surrounding available terminal device, a terminal device that has a smallest quantity of relay terminal devices between the second terminal device and the access network device for access, so that topology loopback of a remote terminal device can be reduced or avoided, thereby improving relay efficiency and ensuring quality of the relay service.

In another example, when the second terminal device is a terminal device in a connected state, the second terminal device may perform measurement reporting on the first terminal device and the third terminal device, and the access network device determines, from the first terminal device and the third terminal device, that the first terminal device provides the relay service for the second terminal device. A process in which the second terminal device determines, via the access network device, that the first terminal device provides the relay service for the second terminal device includes the following steps:

D to D4 are the same as S1101 to S1104 in FIG. 11, and a difference lies in that:
D5: The second terminal device generates the measurement information of the first terminal device based on the first discovery message.

The measurement information of the first terminal device includes ID information of the first terminal device. Further, the measurement information of the first terminal device further includes a service type.

D6: The second terminal device generates the measurement information of the third terminal device based on the second discovery message.

The measurement information of the third terminal device includes ID information of the first terminal device and ID information of the third terminal device. Further, the measurement information of the third terminal device further includes a service type. Measurement reporting content of the third terminal device is the same as that of the first terminal device. In addition, the measurement information of the third terminal device further includes an ID of the first terminal device.

D7: The second terminal device sends a first message to the access network device, and the access network device receives the first message.

The first message includes the measurement information of the first terminal device and the measurement information of the third terminal device.

D8: The access network device determines, based on the first message, that the first terminal device provides the relay service for the second terminal device.

In an example, after receiving the first message, the access network device may determine, from the first terminal device and the third terminal device based on the measurement information, a terminal device that provides the relay service for the second terminal device. For example, when both the first terminal device and the third terminal device may be used as relay terminal devices of the second terminal device, the access network device may select a previous-hop relay terminal device of the third terminal device, and the first terminal device provides the relay service for the second terminal device. In this way, topology loopback of the remote terminal device can be reduced or avoided, thereby improving relay efficiency. In addition, quality of the relay service can be ensured.

D9. The access network device sends the ID information of the first terminal device to the second terminal device, and the second terminal device receives the ID information of the first terminal device from the access network device.

For example, the access network device may send RRC reconfiguration information to the second terminal device, where the RRC reconfiguration information includes the ID information of the first terminal device.

D10: The second terminal device sets up a PC5 connection to the first terminal device based on the ID information of the first terminal device.

D11: The second terminal device sends a connection setup request message to the access network device via the first terminal device, where the connection request setup message is used to set up a connection between the second terminal device and the network device, for example, an RRC connection.

Based on the foregoing content, when the second terminal device is a terminal device in a connected state, the access network device may select, through measurement reporting, a terminal device that provides the relay service for the second terminal device. When the second terminal device is a terminal device in an inactive state/idle state, the second terminal device may select, based on the received discovery message, a terminal device that provides the relay service for the second terminal device.

Content shown in the following embodiments may be applied in combination with one or more of the foregoing embodiments. For example, content shown in the following embodiments may be considered as details of sending the first discovery message by the first terminal device in the embodiment shown in FIG. 5.

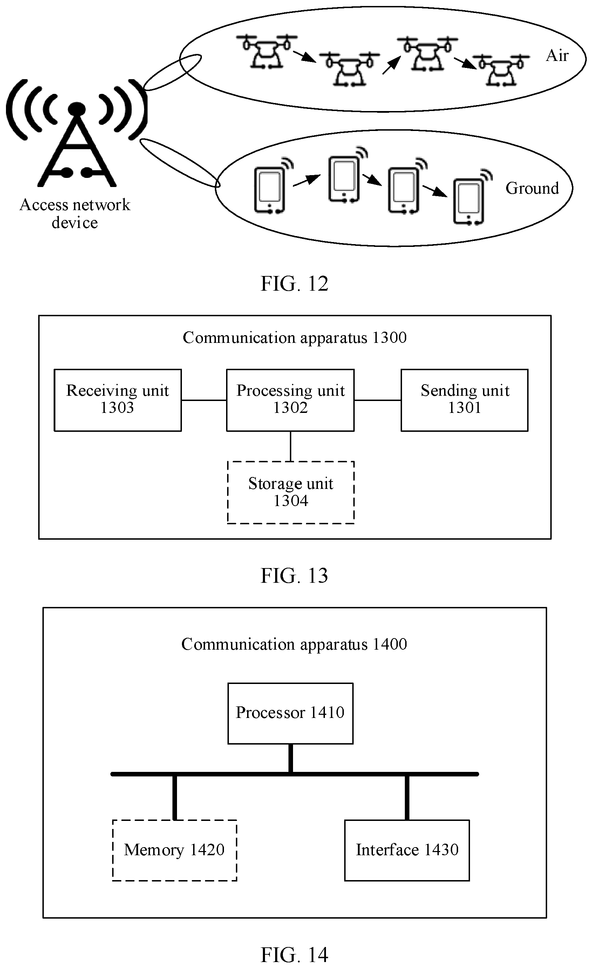

In a pure uncrewed aerial vehicle network that supports a multi-hop relay, a terminal device in the uncrewed aerial vehicle network may select a relay terminal device with reference to Embodiments 1 to 4, and select a proper air relay terminal device. In a scenario in which the uncrewed aerial vehicle network and a terrestrial network coexist, cross networking between a high-altitude UE and a ground UE needs to be avoided, to simplify network complexity and maximize coverage. FIG. 12 is a diagram of still another multi-hop relay scenario according to an embodiment of this application. FIG. 12 shows a scenario in which an uncrewed aerial vehicle and a ground UE coexist. When performing a discovery procedure and providing a relay service, the first terminal device needs to indicate a service type provided by the first terminal device. For example, the first terminal device may add the service type of the provided relay service to the first discovery message, to indicate an identity of the first terminal device.

When the first terminal device performs a discovery procedure, the sent first discovery message includes type information, and the type information indicates a service type of the relay service provided by the first terminal device. For example, when the first terminal device is a high-altitude UE, the type information of the first terminal device indicates that the relay service provided by the first terminal device is an air service. For another example, when the first terminal device is a ground UE, the type information of the first terminal device indicates that the relay service provided by the first terminal device is a ground service. In this way, the ground UE and the high-altitude UE may be distinguished.

The type information may include a specific L2 ID and a specific RSC. The specific L2 ID and the specific RSC are identifiers or indication information specially used for an air UE. For another example, the first terminal device may explicitly indicate, in the first discovery message, a service type of the relay service provided by the first terminal device. In this embodiment of this application, the discovery message sent by the air UE and the discovery message sent by the ground UE may be further isolated by using a frequency band. In this way, an air relay terminal device and a ground relay terminal device can be distinguished, so that an air network and a terrestrial network can be prevented from being crossed, and network complexity can be reduced.

In an example, the second terminal device receives the first discovery message from the first terminal device. The second terminal device determines, based on the type information, the service type of the relay service provided by the first terminal device. For example, when the second terminal device is an air UE, and the service type provided by the first terminal device is an air service, the second terminal device determines that the first terminal device is an available terminal device. The second terminal device may determine, based on other information in the first discovery message, whether the first terminal device provides the relay service for the second terminal device. The other information includes one or more of the following information: a first parameter, a first threshold, ID information of the first terminal device, and ID information of the first relay terminal device. After determining that the first terminal device provides the relay service for the second terminal device, the second terminal device accesses the first terminal device.

For another example, when the second terminal device is a ground UE and the service type provided by the first terminal device is an air service, and the second terminal device obtains the relay service provided by the first terminal device, the second terminal device is no longer used as a relay device to provide the relay service.

In the content shown in this embodiment, the terminal device uses the discovery message to carry the type information, to indicate the service type of the relay service provided by the terminal device, so as to distinguish between the air relay and the ground relay. When the terminal device in the terrestrial network obtains the terminal device in the air network, the terminal device in the terrestrial network stops providing the relay service, and is distinguished from another terminal device in the terrestrial network. In this way, the air network and the terrestrial network can be prevented from being crossed, and network complexity can be reduced.

It should be noted that an execution sequence of the steps in the foregoing method embodiments is merely an example. This is not limited in embodiments of this application. The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed in a manner of hardware or computer software driving hardware depends on a specific application and an implementation constraint condition of the technical solution. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 13 is a possible example block diagram of a communication apparatus according to an embodiment of this application. As shown in FIG. 13, the communication apparatus 1300 may include a sending unit 1301, a processing unit 1302, and a receiving unit 1303. The processing unit 1302 is configured to: control and manage an action of the communication apparatus 1300. The receiving unit 1303 is configured to support communication between the communication apparatus 1300 and another device. Optionally, the receiving unit 1303 and the sending unit 1301 may be one unit (for example, a transceiver unit or a communication unit), and the unit may be configured to perform receiving and sending operations. Optionally, the communication apparatus 1300 may further include a storage unit 1304, configured to store program code and/or data of the communication apparatus 1300.

The processing unit 1302 may support the communication apparatus 1300 in performing actions of the first terminal device, the second terminal device, or the access network device in the foregoing method examples. Alternatively, the processing unit 1302 mainly performs an internal action of the first terminal device, the second terminal device, or the access network device in the method examples. The receiving unit 1303 and the sending unit 1301 may support communication between the communication apparatus 1300 and another device.

For example, the communication apparatus 1300 may be the first terminal device in the foregoing embodiments, or may be a component (for example, a chip) of the first terminal device in the foregoing embodiments.

The processing unit 1302 is configured to send a first discovery message based on first information and/or second information via the sending unit 1301, where the first information includes a first parameter, the first parameter indicates hop count information of the first terminal device, the second information includes a second parameter, the second parameter indicates a quantity of served terminal devices, the served terminal device is a terminal device that obtains a relay service of the first terminal device, and the first discovery message indicates that the first terminal device supports the relay service.

In a possible implementation, the hop count information indicates a quantity of relay terminal devices between the first terminal device and the access network device; or the hop count information indicates a remaining relay hop count; and the remaining relay hop count indicates a maximum value of a remaining connectable-relay hop count, and the relay terminal device is a terminal device that provides the relay service.

In a possible implementation, the receiving unit 1303 is configured to receive a third parameter from a first relay terminal device, where the first relay terminal device provides the relay service for the first terminal device, and the third parameter indicates the quantity of relay terminal devices between the first relay terminal device and the access network device or the remaining relay hop count; and the processing unit 1302 is configured to determine the first parameter based on the third parameter.

In a possible implementation, the receiving unit 1303 is configured to receive a fourth parameter from the access network device, where the fourth parameter indicates the quantity of relay terminal devices between the first terminal device and the access network device or the remaining relay hop count; and the processing unit 1302 is configured to determine the first parameter based on the fourth parameter.

In a possible implementation, the first relay terminal device is connected to the first terminal device through a first link, and the first link is a link between devices.

In a possible implementation, the first information further includes a first threshold, and the first threshold indicates a maximum value of the quantity of relay terminal devices between the first terminal device and the access network device; or the first threshold indicates a minimum value of the remaining relay hop count.

In a possible implementation, the sending unit 1301 is further configured to send the first parameter of the first terminal device to a first served terminal device, where the first served terminal device is connected to the first terminal device through a first link, and the first link is a link between devices.

In a possible implementation, the first information further includes signal quality.

In a possible implementation, the second information further includes a second threshold, and the second threshold is a maximum value of a served terminal device of the first terminal device.

In a possible implementation, the receiving unit 1303 is configured to receive first indication information from a first served terminal device, where the first indication information indicates a quantity of terminal devices that are connected to the first served terminal device and that obtain the relay service of the first served terminal device; and the processing unit 1302 is configured to determine the second parameter based on the first indication information.

In a possible implementation, the sending unit 1301 is configured to send the second parameter of the first terminal device to the first relay terminal device.

In a possible implementation, the served terminal device of the first terminal device is a served terminal device in a connected state; or the served terminal device of the first terminal device includes the served terminal device in the connected state and a served terminal device in a non-connected state, where the non-connected state includes an inactive state and/or an idle state.

In a possible implementation, the processing unit 1302 is configured to determine, based on relay configuration information of the access network device, a quantity of served terminal devices in the connected state, where the relay configuration information is used by the first terminal device to forward data of the served terminal device.

In a possible implementation, the receiving unit 1303 is configured to receive second indication information from the first served terminal device, where the second indication information includes identification information of the first served terminal device and/or identification information of a second served terminal device, and the second served terminal device is a served terminal device in an inactive state and/or an idle state of the first served terminal device.

In a possible implementation, the processing unit 1302 is configured to determine a quantity of served terminal devices in the non-connected state based on the identification information.

In a possible implementation, the processing unit 1302 is configured to: after sending the first discovery message, stop sending the first discovery message based on the second parameter and the second threshold; and the sending unit 1301 is configured to send first stop indication information to the first served terminal device, where the first stop indication information indicates that the relay service is no longer provided.

In a possible implementation, the receiving unit 1303 is configured to receive second stop indication information from the first relay terminal device; the processing unit 1302 is configured to stop sending the first discovery message, where the second stop indication information indicates that the relay service is no longer provided; and the sending unit 1301 is configured to send third stop indication information to the first served terminal device, where the third stop indication information indicates that the relay service is no longer provided.

In a possible implementation, the processing unit 1302 is configured to resume sending the first discovery message based on the second parameter and the second threshold; and the sending unit 1301 is configured to send first resume indication information to the first served terminal device, where the first resume indication information indicates that the relay service is provided.

In a possible implementation, the receiving unit 1303 is configured to receive second resume indication information from the first relay terminal device; the processing unit 1302 is configured to resume sending the first discovery message, where the second resume indication information indicates that the relay service is supported; and the sending unit 1301 is configured to send third resume indication information to the first served terminal device, where the third resume indication information indicates that the relay service is supported.

In a possible implementation, the first threshold is a default configuration of the first terminal device, or the first threshold is configured by the access network device, or the first threshold is indicated by the first relay terminal device.

In a possible implementation, the second threshold is a default configuration of the first terminal device, or the second threshold is configured by the access network device, or the second threshold is indicated by the first relay terminal device.

In a possible implementation, the sending unit 1301 is configured to send third indication information to the first relay terminal device, where the third indication information includes the identification information of the first terminal device and/or identification information of a third served terminal device, the first relay terminal device provides the relay service for the first terminal device, and the third served terminal device is a terminal device in an inactive state and/or an idle state that is of the first terminal device and that obtains the relay service of the first terminal device.

In a possible implementation, the sending unit 1301 is configured to send a first discovery message, where the first discovery message includes a first parameter of the first terminal device, the first parameter indicates hop count information of the first terminal device, and the first discovery message indicates that the first terminal device supports a relay service.

In a possible implementation, the first discovery message further includes a first threshold, and the first threshold indicates a maximum value of a quantity of relay terminal devices between the first terminal device and the access network device; or the first threshold indicates a minimum value of a remaining relay hop count.

In a possible implementation, the first discovery message further includes identification information of a first relay terminal device, and the first relay terminal device provides the relay service for the first terminal device.

In a possible implementation, the first discovery message further includes type information, and the type information indicates a service type of the relay service provided by the first terminal device.

For another example, the communication apparatus 1300 may be the second terminal device in the foregoing embodiments, or may be a component (for example, a chip) of the second terminal device in the foregoing embodiments.

The receiving unit 1303 is configured to receive a first discovery message from a first terminal device, where the first discovery message indicates that the first terminal device supports a relay service, the first discovery message includes a first parameter of the first terminal device, and the first parameter indicates hop count information of the first terminal device.

The processing unit 1302 is configured to determine, based on the first discovery message, that the first terminal device provides the relay service for the second terminal device.

In a possible implementation, the hop count information indicates a quantity of relay terminal devices between the first terminal device and an access network device; or the hop count information indicates a remaining relay hop count; and the relay terminal device is a terminal device that provides the relay service.

In a possible implementation, the receiving unit 1303 is configured to receive a second discovery message from a third terminal device, where the second discovery message indicates that the third terminal device supports the relay service, the second discovery message includes identification information of the first terminal device, and the first terminal device provides the relay service for the third terminal device.

In a possible implementation, the first discovery message further includes a first threshold, and the first threshold indicates a maximum value of the quantity of relay terminal devices between the first terminal device and the access network device; or the first threshold indicates a minimum value of the remaining relay hop count.

In a possible implementation, the first discovery message further includes type information, and the type information indicates a service type of the relay service provided by the first terminal device.

In a possible implementation, the processing unit 1302 is configured to generate measurement information of the first terminal device based on the first discovery message; and the sending unit 1301 is configured to report the measurement information of the first terminal device to the access network device, where the measurement information includes one or more of the first parameter, the identification information of the first terminal device, identification information of a first relay terminal device, the first threshold, and the type information, and the first relay terminal device provides the relay service for the first terminal device.

In a possible implementation, the processing unit 1302 is configured to generate measurement information of a third terminal device based on a second discovery message of the third terminal device; and the sending unit 1301 is configured to report the measurement information of the third terminal device to the access network device, where the measurement information of the third terminal device includes the identification information of the first terminal device and identification information of the third terminal device.

For another example, the communication apparatus 1300 may be the access network device in the foregoing embodiments, or may be a component (for example, a chip) of the access network device in the foregoing embodiments.

The sending unit 1301 is configured to send a third parameter to a first terminal device, where the third parameter indicates a quantity of relay terminal devices between a first relay terminal device and the access network device or a remaining relay hop count, and the first relay terminal device provides a relay service for the first terminal device.

In a possible implementation, the processing unit 1302 is configured to configure a first threshold for the first terminal device, where the first threshold indicates a maximum value of the quantity of relay terminal devices between the first terminal device and the access network device, or the first threshold indicates a minimum value of the remaining relay hop count.

In a possible implementation, the processing unit 1302 is configured to configure a second threshold for the first terminal device, where the second threshold indicates a maximum value of a served terminal device of the first terminal device, and the served terminal device is a terminal device that obtains the relay service of the first terminal device.

In a possible implementation, the receiving unit 1303 is configured to receive a first message from a second terminal device, where the first message includes measurement information of the first terminal device, the measurement information includes one or more of a first parameter, identification information of the first terminal device, identification information of a first relay terminal device, a first threshold, and type information, the first parameter indicates hop count information, the first relay terminal device provides the relay service for the first terminal device, the type information indicates a service type of the relay service provided by the first terminal device, and the first threshold indicates a maximum value of the quantity of relay terminal devices between the first terminal device and the access network device or a minimum value of the remaining relay hop count.

The processing unit 1302 is configured to determine, based on the first message, that the first terminal device provides the relay service for the second terminal device.

In a possible implementation, the hop count information indicates the quantity of relay terminal devices between the first terminal device and the access network device; or the hop count information indicates the remaining relay hop count; and the relay terminal device is a terminal device that provides the relay service.

In a possible implementation, the first message further includes measurement information of a third terminal device, the measurement information includes the identification information of the first terminal device and identification information of the third terminal device, and the first terminal device provides the relay service for the third terminal device.

It should be understood that division into units in the apparatus is merely logical function division. In an actual implementation, all or some of the units may be integrated into one physical entity or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of these units may be integrated, or may be implemented independently. The processing element herein may also be referred to as a processor, and may be an integrated circuit having a signal processing capability. In an implementation process, operations in the foregoing methods or the foregoing units may be implemented by using a hardware integrated logic circuit in a processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For another example, the units may be integrated together and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

FIG. 14 is a diagram of a communication apparatus according to an embodiment of this application. The communication apparatus is configured to implement operations of the first terminal device, the second terminal device, or the access network device in the foregoing embodiments. The communication apparatus 1400 includes a processor 1410 and an interface 1430. Optionally, the communication apparatus 1400 further includes a memory 1420. The interface 1430 is configured to communicate with another device.

In the foregoing embodiments, the method performed by the first terminal device, the second terminal device, or the access network device may be implemented by the processor 1410 by invoking a program stored in a memory (which may be the memory 1420 in the first terminal device, the second terminal device, or the access network device, or may be an external memory). To be specific, the communication apparatus 1400 configured to implement a function of the first terminal device, the second terminal device, or the access network device may include the processor 1410. The processor 1410 invokes a program in the memory, to perform the method performed by the first terminal device, the second terminal device, or the access network device in the foregoing method embodiments. The processor herein may be an integrated circuit having a signal processing capability, for example, a CPU. The access network device may be implemented by configuring one or more integrated circuits for implementing the foregoing method, for example, one or more ASICs, one or more microprocessors DSPs, one or more FPGAs, or a combination of at least two of the integrated circuit forms. Alternatively, the foregoing implementations may be combined.

When the communication apparatus 1400 is used in the foregoing method, the processor 1410 is configured to implement a function of the processing unit 1302, and the interface 1430 is configured to implement functions of the sending unit 1301 and the receiving unit 1303.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Various illustrative logic units and circuits described in embodiments of this application may implement or operate the described functions by using a general-purpose processor, a digital signal processor, an application-specific integrated circuit (ASIC), a field programmable gate array (FPGA) or another programmable logic apparatus, a discrete gate or transistor logic, a discrete hardware component, or any implementation of the foregoing combinations. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a random access memory (random access memory, RAM), a flash memory, a read-only memory (read-only memory, ROM), an EPROM, an EEPROM, a register, a hard disk, a removable disc, a CD-ROM, or any other form of storage media in the art. For example, the storage medium may connect to a processor, so that the processor can read information from the storage medium and write information to the storage medium. Optionally, the storage medium may alternatively be integrated into a processor. The processor and the storage media may be disposed in an ASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more example implementations, the foregoing functions described in embodiments of this application may be implemented by using hardware, software, firmware, or any combination of the three. If the present invention is implemented by software, these functions may be stored in a computer-readable medium or are transmitted to the computer-readable medium in a form of one or more instructions or code. The computer-readable medium includes a computer storage medium and a communication medium that enables a computer program to move from one place to another. The storage media may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to carry or store program code, where the program code is in a form of an instruction or a data structure or in a form that can be read by a general or special computer or a general or special processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and disc (disc) include a compressed disk, a laser disk, an optical disc, a digital versatile disc (digital versatile disc, DVD), a floppy disk, and a Blu-ray disc. The disc usually copies data magnetically. The disk usually optically copies data by laser. The foregoing combination may also be included in the computer-readable medium.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

In the foregoing specific implementations, the objectives, technical solutions, and beneficial effects of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application. The foregoing descriptions in the specification of this application may enable any technology in the art to utilize or implement the content of embodiments of this application, and any modification based on the disclosed content shall be considered obvious in this field. The basic principles described in embodiments of this application may be applied to other variations without departing from the essence and scope of the invention of this application. Therefore, content disclosed in embodiments of this application is not limited to the described embodiments and implementations, and may be extended to a maximum range consistent with the principles of this application and the disclosed new features.

Although this application is described with reference to specific features and embodiments thereof, it is clear that various modifications and combinations may be made to this application without departing from the spirit and scope of embodiments of this application. Correspondingly, this specification and the accompanying drawings are merely example description of this application defined by the appended claims, and are considered as any or all of modifications, variations, combinations or equivalents that cover the scope of this application. It is clear that a person skilled in the art can make various modifications and variations to this application without departing from the scope of this application. Therefore, provided that the modifications and variations in embodiments of this application fall within the scope of the claims of this application and their equivalent technologies, embodiments of this application are also intended to include the modifications and variations.

## Claims

1. A communication method, applied to a first terminal device, and comprising:
sending a first discovery message based on first information and/or second information, wherein
the first information comprises a first parameter, the first parameter indicates hop count information of the first terminal device, the second information comprises a second parameter, the second parameter indicates a quantity of served terminal devices, the served terminal device is a terminal device that obtains a relay service of the first terminal device, and the first discovery message indicates that the first terminal device supports the relay service.

2. The method according to claim 1, wherein the hop count information indicates a quantity of relay terminal devices between the first terminal device and an access network device; or the hop count information indicates a remaining relay hop count; and the relay terminal device is a terminal device that provides the relay service, and the remaining relay hop count indicates a maximum value of a remaining connectable-relay hop count.

3. The method according to claim 1 or 2, wherein the method further comprises:
receiving a third parameter from a first relay terminal device, wherein the first relay terminal device provides the relay service for the first terminal device, and the third parameter indicates the quantity of relay terminal devices between the first relay terminal device and the access network device or the remaining relay hop count; and
determining the first parameter based on the third parameter.

4. The method according to claim 1 or 2, wherein the method further comprises:
receiving a fourth parameter from the access network device, wherein the fourth parameter indicates the quantity of relay terminal devices between the first terminal device and the access network device or the remaining relay hop count; and
determining the first parameter based on the fourth parameter.

5. The method according to any one of claims 1 to 4, wherein the first information further comprises a first threshold, and the first threshold indicates a maximum value of the quantity of relay terminal devices between the first terminal device and the access network device; or the first threshold indicates a minimum value of the remaining relay hop count.

6. The method according to any one of claims 1 to 5, wherein the method further comprises:
sending the first parameter of the first terminal device to a first served terminal device, wherein the first served terminal device is connected to the first terminal device through a first link, and the first link is a link between devices.

7. The method according to any one of claims 1 to 6, wherein the second information further comprises a second threshold, and the second threshold is a maximum value of a quantity of served terminal devices of the first terminal device.

8. The method according to any one of claims 1 to 7, wherein the method further comprises:
receiving first indication information from a first served terminal device, wherein the first indication information indicates a quantity of terminal devices that are connected to the first served terminal device and that obtain the relay service of the first served terminal device; and
determining the second parameter based on the first indication information.

9. The method according to any one of claims 1 to 8, wherein the method further comprises:
sending the second parameter of the first terminal device to the first relay terminal device.

10. The method according to any one of claims 1 to 7, wherein the served terminal device of the first terminal device is a served terminal device in a connected state; or the served terminal device of the first terminal device comprises the served terminal device in the connected state and a served terminal device in a non-connected state, wherein the non-connected state comprises an inactive state and/or an idle state.

11. The method according to claim 10, wherein the method further comprises:
determining, based on relay configuration information of the access network device, a quantity of served terminal devices in the connected state, wherein the relay configuration information is used by the first terminal device to forward data of the served terminal device.

12. The method according to claim 11, wherein the method further comprises:
receiving second indication information from the first served terminal device, wherein the second indication information comprises identification information of the first served terminal device and/or identification information of a second served terminal device, and the second served terminal device is a served terminal device in a non-connected state of the first served terminal device.

13. The method according to claim 12, wherein the method further comprises:
determining a quantity of served terminal devices in the non-connected state based on the identification information.

14. The method according to any one of claims 1 to 13, wherein after sending the first discovery message, the method further comprises:
stopping sending the first discovery message based on the second parameter and the second threshold; and
sending first stop indication information to the first served terminal device, wherein the first stop indication information indicates that the relay service is no longer provided.

15. The method according to any one of claims 1 to 14, wherein the method further comprises:
receiving second stop indication information from the first relay terminal device, and stopping sending the first discovery message, wherein the second stop indication information indicates that the relay service is no longer provided; and
sending third stop indication information to the first served terminal device, wherein the third stop indication information indicates that the relay service is no longer provided.

16. A communication method, applied to a first terminal device, and comprising:
sending a first discovery message, wherein
the first discovery message comprises a first parameter of the first terminal device, the first parameter indicates hop count information of the first terminal device, and the first discovery message indicates that the first terminal device supports a relay service.

17. The method according to claim 16, wherein the hop count information indicates a quantity of relay terminal devices between the first terminal device and an access network device; or the hop count information indicates a remaining relay hop count; and the relay terminal device is a terminal device that provides the relay service.

18. The method according to claim 16 or 17, wherein the first discovery message further comprises a first threshold, and the first threshold indicates a maximum value of the quantity of relay terminal devices between the first terminal device and the access network device; or the first threshold indicates a minimum value of the remaining relay hop count.

19. The method according to any one of claims 16 to 18, wherein the first discovery message further comprises identification information of a first relay terminal device, and the first relay terminal device provides the relay service for the first terminal device.

20. The method according to any one of claims 16 to 19, wherein the first discovery message further comprises type information, and the type information indicates a service type of the relay service provided by the first terminal device.

21. A communication method, applied to a second terminal device, and comprising:
receiving a first discovery message from a first terminal device, wherein the first discovery message indicates that the first terminal device supports a relay service, the first discovery message comprises a first parameter of the first terminal device, and the first parameter indicates hop count information of the first terminal device; and
determining, based on the first discovery message, that the first terminal device provides the relay service for the second terminal device.

22. The method according to claim 21, wherein the hop count information indicates a quantity of relay terminal devices between the first terminal device and an access network device; or the hop count information indicates a remaining relay hop count; and the relay terminal device is a terminal device that provides the relay service.

23. The method according to claim 22, wherein the method further comprises:
receiving a second discovery message from a third terminal device, wherein the second discovery message indicates that the third terminal device supports the relay service, the second discovery message comprises identification information of the first terminal device, and the first terminal device provides the relay service for the third terminal device.

24. The method according to any one of claims 21 to 23, wherein the first discovery message further comprises a first threshold, and the first threshold indicates a maximum value of the quantity of relay terminal devices between the first terminal device and the access network device; or the first threshold indicates a minimum value of the remaining relay hop count.

25. The method according to any one of claims 21 to 24, wherein the first discovery message further comprises type information, and the type information indicates a service type of the relay service provided by the first terminal device.

26. The method according to any one of claims 21 to 25, wherein determining, based on the first discovery message, that the first terminal device provides the relay service for the second terminal device comprises:
generating measurement information of the first terminal device based on the first discovery message, wherein the measurement information indicates the access network device to determine that the first terminal device provides the relay service for the second terminal device, the measurement information comprises one or more of the first parameter, the identification information of the first terminal device, identification information of a first relay terminal device, the first threshold, and the type information, and the first relay terminal device provides the relay service for the first terminal device; and
reporting the measurement information of the first terminal device to the access network device.

27. The method according to claim 26, wherein the method further comprises:
generating measurement information of a third terminal device based on a second discovery message of the third terminal device, wherein the measurement information of the third terminal device comprises the identification information of the first terminal device and identification information of the third terminal device; and
reporting the measurement information of the third terminal device to the access network device.

28. A communication method, applied to an access network device, and comprising:
receiving a first message from a second terminal device, wherein the first message comprises measurement information of a first terminal device, the measurement information comprises one or more of a first parameter, identification information of the first terminal device, identification information of a first relay terminal device, a first threshold, and type information, the first parameter indicates hop count information, the first relay terminal device provides a relay service for the first terminal device, the type information indicates a service type of the relay service provided by the first terminal device, and the first threshold indicates a maximum value of a quantity of relay terminal devices between the first terminal device and the access network device or a minimum value of a remaining relay hop count; and
determining, based on the first message, that the first terminal device provides the relay service for the second terminal device.

29. The method according to claim 28, wherein the hop count information indicates the quantity of relay terminal devices between the first terminal device and the access network device; or the hop count information indicates the remaining relay hop count; and the relay terminal device is a terminal device that provides the relay service.

30. The method according to claim 28 or 29, wherein the first message further comprises measurement information of a third terminal device, the measurement information comprises the identification information of the first terminal device and identification information of the third terminal device, and the first terminal device provides the relay service for the third terminal device.

31. A communication apparatus, comprising a memory and one or more processors, wherein the memory is coupled to the one or more processors; and
the memory is configured to store a computer program or instructions, and when the computer program or the instructions are executed by the one or more processors, the communication apparatus is enabled to perform the method according to any one of claims 1 to 30.

32. A communication apparatus, comprising a processing unit, wherein
the processing unit is configured to perform the method according to any one of claims 1 to 30.

33. A chip, comprising a processor, wherein the processor is coupled to a memory, and is configured to execute a computer program or instructions stored in the memory, so that the chip performs the method according to any one of claims 1 to 30.

34. A computer-readable storage medium, comprising computer program instructions, wherein when the computer program instructions are executed by a computer, the processor performs the method according to any one of claims 1 to 30.

35. A computer program product, wherein the computer program product comprises a computer program, and when the computer program is run on a computer, the computer is enabled to perform the method according to any one of claims 1 to 30.

36. A communication system, comprising a first terminal device configured to perform the method according to any one of claims 16 to 20, a second terminal device configured to perform the method according to any one of claims 21 to 27, and an access network device configured to perform the method according to any one of claims 28 to 30.
